# EUROPEAN PATENT SPECIFICATION

(11) **EP 4 708 057 B1**
(45) Date of publication and mention of the grant of the patent: **28.10.2026**
(21) Application number: 24850517.4
(22) Date of filing: 21.03.2024
(51) Int. Cl.: G06F 12/02, G06F 12/0882, G06F 9/48, G06F 9/50

(54) **MEMORY RECLAIM METHOD AND ELECTRONIC DEVICE**
SPEICHERRÜCKGEWINNUNGSVERFAHREN UND ELEKTRONISCHE VORRICHTUNG
PROCÉDÉ DE RÉCUPÉRATION DE MÉMOIRE ET DISPOSITIF ÉLECTRONIQUE

(30) Priority: 07.08.2023 CN 202310991388
(43) Date of publication of application: 11.03.2026
(73) Proprietor: Honor Device Co., Ltd., Shenzhen, Guangdong 518040 (CN)
(72) Inventor: LIN, Kunli, Shenzhen, Guangdong 518040 (CN)
(74) Representative: Gill Jennings & Every LLP
(86) International application number: PCT/CN2024/083116
(87) International publication number: WO 2025/030858

(56) References cited:
- EP-A1- 4 220 400
- CN-A- 107 436 779
- CN-A- 108 228 341
- CN-A- 115 269 169

## Description

This application claims priority to Chinese Patent Application No. 202310991388.5, filed with the China National Intellectual Property Administration on August 7, 2023 and entitled "MEMORY RECLAIMING METHOD AND **ELECTRONIC DEVICE"**

### TECHNICAL FIELD

This application relates to the field of computer technologies, and in particular, to a memory reclaiming method and an electronic device.

### BACKGROUND

An internal memory (for example, referred to as a memory) of an electronic device is configured to temporarily store operation data of a CPU and data exchanged with an external memory such as a hard disk. A memory is a bridge for communication between an external memory and a CPU, and all applications are run based on a memory resource.

Certainly, a memory resource of an electronic device is limited. When a memory is insufficient, an operating system clears data of a rarely used application in the memory, that is, performs memory reclaiming.

In the related art, during memory reclaiming in an electronic device in which a memory control subsystem mechanism is enabled, a large amount of data may be loaded back to a system memory soon after being released, affecting memory reclaiming efficiency of the electronic device. Document EP4220400 A1 discloses a memory management method wherein anonymous pages in an application-level memory control group are tracked at application level, while file pages use a global LRU list.

### SUMMARY

Embodiments of this application provide a memory reclaiming method and an electronic device, to differently reclaim, based on an application level of an application, a system memory occupied by data of the application, thereby reducing a data amount repeatedly released and reloaded, and improving memory reclaiming efficiency.

To achieve the foregoing objective, embodiments of this application adopt the following technical solutions:

According to a first aspect, an embodiment of this application provides a memory reclaiming method. The method is applied to an electronic device. Each application in the electronic device corresponds to a memory control subsystem memcg. The method includes: determining a first memory size corresponding to a first application that is run in a background, where the first memory size indicates a size of a memory to be reclaimed from a system memory occupied by the first application, the first memory size decreases as an application level of the first application increases, and the application level indicates activeness of the application during running in the background; and reclaiming, based on the first memory size, the system memory occupied by the first application.

In the foregoing embodiment, during reclaiming of the system memory, the electronic device in which the memcg mechanism is reclaimed differently reclaims, based on the application level, the system memory occupied by the application. For example, if the application level increases, the to-be-reclaimed memory size decreases correspondingly, and if the application level decreases, the to-be-reclaimed memory size increases correspondingly. On the one hand, reclaiming of a large system memory when the application level is relatively high can be avoided, to reduce released application data (for example, anonymous pages) quickly reloaded back into the system memory. On the other hand, occupation of a large system memory by an application with a low application level for a long time can be avoided.

According to the invention, before the determining a first memory size corresponding to a first application that is run in a background, the method further includes: determining a first reclaimable memory size corresponding to the first application, where the first memory size is not greater than the first reclaimable memory size.

In the foregoing embodiment, a magnitude of the determined first memory size is limited by using the reclaimable memory size of the application, to avoid a problem that an excessively large system memory is reclaimed from a single application a single time while a system memory occupied by some applications is not reclaimed, that is, a problem of uneven system memory reclaiming of a plurality of background applications.

According to the invention the determining a first reclaimable memory size corresponding to the first application includes: determining that an application score of the first application is a first score, where the application score of the first application decreases as the application level of the first application increases; and determining the first reclaimable memory size based on the first score and a second memory size and a third memory size corresponding to the first application, where the second memory size indicates a size of all anonymous pages in the first application, and the third memory size indicates a size of anonymous pages in the first application that are swapped from the system memory.

In the foregoing embodiment, the reclaimable memory size of the application affected by not only by the application level, but also by a total size of all of the anonymous pages of the application and a size of transferred anonymous pages. Therefore, a problem that an excessively large total system memory is reclaimed from an application with a high application level after a plurality of times of memory reclaiming is avoided.

In some embodiments, the determining the first reclaimable memory size based on the first score and a second memory size and a third memory size corresponding to the first application includes: determining a transfer proportion corresponding to the first score, where the transfer proportion is a proportion used to determine a transferable anonymous page size in a single application, and a higher first score corresponds to a higher transfer proportion; determining a product of the transfer proportion and the second memory size as a first anonymous page size; and removing the third memory size from the first anonymous page size, to determine the first reclaimable memory size.

In the foregoing embodiment, the problem that an excessively large total system memory is reclaimed from an application with a high application level after a plurality of times of memory reclaiming is avoided.

In some embodiments, when the determined first reclaimable memory size is less than zero, a value of the first reclaimable memory size is modified to zero.

In the foregoing embodiment, in a scenario in which the application score of the application changes, in the foregoing method, the calculated first reclaimable memory size may be less than zero. The first reclaimable memory size may be modified to improve fault tolerance.

In some embodiments, the determining a first memory size includes: obtaining a first proportion of the first reclaimable memory size to a fourth memory size, where the fourth memory size is a sum of reclaimable memory sizes corresponding to all applications whose application score is the first score and that are run in the background; and determining a product of the first proportion and a fifth memory size as the first memory size, where the fifth memory size is a total size of memories to-be-reclaimed from all of the applications whose application score is the first score.

In the foregoing embodiment, sizes of system memories to be reclaimed from applications with a same application level are evenly assigned based on a proportion of the reclaimable memory size to a total reclaimable memory of applications with the same score. In this way, for each of applications with the same level, a to-be-reclaimed system memory size is determined based on a size of all anonymous pages of the application and a size of transferred anonymous pages. Therefore, a problem that an excessively large system memory is reclaimed from some of applications having a same application level while a system memory occupied by others of the applications is not reclaimed is avoided, thereby improving memory reclaiming efficiency.

In some embodiments, each application corresponds to a memcg data structure, the memcg data structure includes a field for carrying a reclaimable memory size, and after the determining the first reclaimable memory size, the method further includes: writing the determined first reclaimable memory size into the memcg data structure of the corresponding first application; and the determining a first memory size further includes: obtaining a fourth memory size; the obtaining a fourth memory size includes: obtaining, after a reclaimable memory size is written into the memcg data structure of each application that is run in the background, reclaimable memory sizes from the memcg data structures of applications whose application score is the first score and that are run in the background; and adding up all of the obtained reclaimable memory sizes to obtain the corresponding fourth memory size.

In some embodiments, after the reclaiming, based on the first memory size, the system memory occupied by the first application, the method further includes: updating the reclaimable memory size in the memcg data structure of the first application by using a difference between the first reclaimable memory size of the first application and the first memory size.

In the foregoing embodiment, after each reclaim, the reclaimable memory size in the memcg data structure may be updated. Therefore, in next reclaim, a process of redetermining the reclaimable memory size can be omitted, thereby shortening a time required for memory reclaiming and improving memory reclaiming efficiency.

In some embodiments, the determining a first memory size further includes: calculating a total reclaimable memory size corresponding to all of the applications that are run in the background in the electronic device; and obtaining the fifth memory size, where a proportion of the fifth memory size to a total to-be-reclaimed memory size of the electronic device is equal to a proportion of the fourth memory size to the total reclaimable memory size of the electronic device.

In some embodiments, the reclaiming, based on the first memory size, the system memory occupied by the first application further includes: determining, from anonymous pages of the first application, a target memory page whose system memory occupation is the first memory size, where activeness of the target memory page is lower than those of the other anonymous pages of the first application; and swapping the target memory page from the system memory.

In the foregoing example, a system memory reclaiming size corresponding to the application is affected by an application level. During memory reclaiming, activeness of application data in the application affects whether the application data is to be released, to reduce a possibility that the application data is loaded back to the system memory soon after being released.

In some embodiments, the method further includes: determining a sixth memory size corresponding to a second application that is run in the background, where the sixth memory size indicates a size of a memory to be reclaimed from a system memory occupied by the second application, and a size of anonymous pages stored in the system memory by the second application and a size of anonymous pages swapped from the system memory are both the same as those of the first application; and when an application level of the second application is lower than the application level of the first application, the sixth memory size is greater than the first memory size; and reclaiming, based on the sixth memory size, the system memory occupied by the second application, where a sum of the first memory size and the sixth memory size are not greater than the total to-be-reclaimed memory size of the electronic device.

In the foregoing embodiment, for different applications with different application levels, different sizes of system memories are reclaimed, thereby avoiding a problem that an excessively large system memory is reclaimed from an active application while an inactive application occupies a system memory for a long time.

According to a second aspect, an embodiment of this application provides an electronic device. The electronic device includes one or more processors and a memory. The memory is coupled to the processor. The memory is configured to store computer program code, and the computer program code includes computer instructions. When the one or more processors execute the computer instructions, the one or more processors are configured to: determine a first memory size corresponding to a first application that is run in a background, where the first memory size indicates a size of a memory to be reclaimed from a system memory occupied by the first application, the first memory size decreases as an application level of the first application increases, and the application level indicates activeness of the application during running in the background; and reclaim, based on the first memory size, the system memory occupied by the first application.

According to the invention before determining the first memory size corresponding to the first application that is run in the background, the foregoing one or more processors are configured to: determine a first reclaimable memory size corresponding to the first application, where the first memory size is not greater than the first reclaimable memory size.

According to the invention, the foregoing one or more processors are further configured to: determine that an application score of the first application is a first score, where the application score of the first application decreases as the application level of the first application increases; and determine the first reclaimable memory size based on the first score and a second memory size and a third memory size corresponding to the first application, where the second memory size indicates a size of all anonymous pages in the first application, and the third memory size indicates a size of anonymous pages in the first application that are swapped from the system memory.

In some embodiments, the foregoing one or more processors are further configured to: determine a transfer proportion corresponding to the first score, where the transfer proportion is a proportion used to determine a transferable anonymous page size in a single application, and a higher first score corresponds to a higher transfer proportion; determine a product of the transfer proportion and the second memory size as a first anonymous page size; and remove the third memory size from the first anonymous page size to determine the first reclaimable memory size.

In some embodiments, the foregoing one or more processors are further configured to: obtain a first proportion of the first reclaimable memory size to a fourth memory size, where the fourth memory size is a sum of reclaimable memory sizes corresponding to all applications whose application score is the first score and that are run in the background; and determine a product of the first proportion and a fifth memory size as the first memory size, where the fifth memory size is total size of memories to-be-reclaimed from all of the applications whose application score is the first score.

In some embodiments, each application corresponds to a memcg data structure, the memcg data structure includes a field for carrying a reclaimable memory size, and after determining the first reclaimable memory size, the one or more processors are further configured to: write the determined first reclaimable memory size into the memcg data structure of the corresponding first application; and the determining a first memory size further includes: obtaining a fourth memory size; the obtaining a fourth memory size includes: obtaining, after a reclaimable memory size is written into the memcg data structure of each application that is run in the background, reclaimable memory sizes from the memcg data structures of applications whose application score is the first score and that are run in the background; and adding up all of the obtained reclaimable memory sizes to obtain the corresponding fourth memory size.

In some embodiments, the foregoing one or more processors are further configured to update the reclaimable memory size in the memcg data structure of the first application by using a difference between the first reclaimable memory size of the first application and the first memory size.

In some embodiments, the foregoing one or more processors are further configured to: calculate a total reclaimable memory size corresponding to all of the applications that are run in the background in the electronic device; and obtain the fifth memory size, where a proportion of the fifth memory size to a total to-be-reclaimed memory size of the electronic device is equal to a proportion of the fourth memory size to the total reclaimable memory size of the electronic device.

In some embodiments, the foregoing one or more processors are further configured to: determine, from anonymous pages of the first application, a target memory page whose system memory occupation is the first memory size, where activeness of the target memory page is lower than those of the other anonymous pages of the first application; and swap the target memory page from the system memory.

In some embodiments, the foregoing one or more processors are further configured to: determine a sixth memory size corresponding to a second application that is run in the background, where the sixth memory size indicates a size of a memory to be reclaimed from a system memory occupied by the second application, and a size of anonymous pages stored in the system memory by the second application and a size of anonymous pages swapped from the system memory are both the same as those of the first application; and when an application level of the second application is lower than the application level of the first application, the sixth memory size is greater than the first memory size; and reclaim, based on the sixth memory size, the system memory occupied by the second application, where a sum of the first memory size and the sixth memory size are not greater than the total to-be-reclaimed memory size of the electronic device.

According to a third aspect, an embodiment of this application provides a computer storage medium, including computer instructions. The computer instructions, when run on an electronic device, cause the electronic device to perform the method in the first aspect and the possible embodiments of the first aspect.

According to a fourth aspect, this application provides a computer program product. The computer program product, when run on the foregoing electronic device, causes the electronic device to perform the method in the first aspect and the possible embodiments of the first aspect.

It may be understood that, the electronic device, the computer storage medium, and the computer program product provided in the foregoing aspects are all applied to the corresponding method provided above. Therefore, for beneficial effects that can be achieved by the electronic device, the computer storage medium, and the computer program product, refer to the beneficial effects in the corresponding method. Details are not described herein.

### BRIEF DESCRIPTION OF DRAWINGS

FIG. 1 is an example diagram of a corresponding least recently used linked list in a scenario in which a memcg mechanism is not enabled;
FIG. 2 is an example diagram of a corresponding least recently used linked list in a scenario in which a memcg mechanism is enabled;
FIG. 3 is a schematic structural diagram of an electronic device according to an embodiment of this application;
FIG. 4 is an example diagram of a software structure of an electronic device according to an embodiment of this application;
FIG. 5 is a step flowchart of a memory reclaiming method according to an embodiment of this application;
FIG. 6 is a sub-step flowchart of S 101 in FIG. 5;
FIG. 7 is an example diagram of a first space size, a second space size, and a third space size corresponding to an application a according to an embodiment of this application;
FIG. 8 is an example diagram of a scenario of performing memory reclaiming on applications in a same application set according to an embodiment of this application; and
FIG. 9 is an example diagram of a scenario of performing memory reclaiming on applications in different application sets according to an embodiment of this application.

### DESCRIPTION OF EMBODIMENTS

Technical solutions in embodiments of this application are described below with reference to drawings in embodiments of this application. In the description of this application, unless otherwise specified, "at least one" means one or more, and "a plurality of" means two or more. In addition, to facilitate clear description of the technical solutions of embodiments of this application, in embodiments of this application, terms such as "first", "second", and the like are used to distinguish between same items or similar items having substantially the same function and role. A person skilled in the art may understand that the terms such as "first" and "second" do not define a number or an execution sequence, and the terms such as "first" and "second" do not indicate a definite difference.

For facilitate understanding, technical terms involved in embodiments of this application are first described.

An external memory is a "storage" relative to an internal memory of an electronic device. The external memory may include a read only memory (read only memory, ROM), a hard disk, a floppy disk, an optical disc, a USB flash drive, an embedded multimedia card (embeded multimedia card, emmc), a universal flash storage (universal flashstorage, UFS), a multimedia card, and the like.

The internal memory, which may also be referred to as a memory, is configured to store page data corresponding to an application. In addition, the memory may include a system memory and a swap (swap) partition. In a system established based on a Linux kernel, page data is mainly stored in a system memory in forms of a file page (file-backed page) and an anonymous page (anonymous page).

The anonymous page and the file page may alternatively be collectively referred to as a memory page.

An anonymous page is a memory page for which an operating system does not provide a name tag. Since a virtual memory address (VMA) cannot be used to distinguish between different anonymous pages based on names, a memory page without a name tag is referred to as an anonymous page. During reclaiming of an anonymous page, to enable a kernel to further access the corresponding anonymous page subsequently, the anonymous page cannot be directly released (that is, deleted) from the system memory. The anonymous page needs to be swapped from the system memory to a Swap partition for compression and storage. Data in the Swap partition may be accessed by a CPU. An anonymous page is specifically a system memory page dynamically allocated in a program running process, and includes a heap, a stack, a data segment, and the like.

A file page is a memory page for which an operating system provides a name tag. A file name corresponding to the memory page is recorded in a VMA. Different file pages may be distinguished from each other based on file names. A system memory page with a name tag is referred to as a file page. During reclaiming of a file page, the file page may be directly released (that is, deleted) from the system memory. Then, the kernel may load the file page from an external memory to the system memory based on the file name of the file page, and then read the file page. The file page is specifically a memory page for storing file data, and includes a code segment, a library file, file data accessed during program interaction, and the like.

In a scenario in which an electronic device plays music, a system memory occupied by program data of a player run by the electronic device is an anonymous page, and a system memory occupied by a music file loaded by the electronic device from an external memory to a system memory is a file page.

zram is also referred to as zRAM, which is a function of a CPU core, and can provide virtual memory compression. For example, an anonymous page of a swap partition is compressed and swapped through the zram function.

The Swap partition is an area allocated from a memory. If a memory space runs low, an application does not need to be terminated. Instead, an anonymous page of the application is swapped to the swap partition and compressed. When the application is started later, the data may be directly restored to the system memory, thereby reducing a time required for restarting the application.

A memory swap mechanism (swap mechanism) means writing data stored in a memory space that is not frequently accessed into an external memory and then reclaiming the memory space for use by another process. For example, a swap area is defined on a hard disk by partition. An inactive memory page in a memory is swapped to the hard disk through the swap area, so as to enlarge the memory.

A least recently used (least recently used, LRU) algorithm is a frequently used memory page replacement algorithm. It may be understood that if a piece of data is not accessed in a recent period of time, a possibility that the data is accessed in the future is very small. When memory reclaiming is required, a memory page that is least recently used is reclaimed, to reclaim a memory space of the memory page. In an LRU linked list, memory pages are sorted in ascending order of sizes at corresponding first time intervals. A first time interval refers to a time interval between a time point at which a memory page is used last time and a current time point. In this way, in the LRU linked list, a memory page arranged closer to a tail of the linked list is accessed earlier (that is, a colder memory page), and a memory page arranged closer to a head of the linked list is accessed latest (that is, a hotter memory page). During memory reclaiming, reclaiming starts from the tail of the linked list.

In some embodiments, a memory waterline may be preconfigured in the electronic device, and the memory waterline is used to indicate a condition for triggering memory space reclaiming. When a system memory occupied in the electronic device exceeds the memory waterline, reclaiming for the system memory may be triggered.

In some embodiments, memory pages of all applications in the electronic device are placed on LRU linked lists of a same node. A same node corresponds to a plurality of LRU linked lists, such as an inactive anonymous linked list, an active anonymous linked list, an inactive file linked list, an active file linked list, and a non-reclaimable linked list.

For example, anonymous pages that are not accessed in a recent time period are placed in the inactive anonymous linked list. For example, the inactive anonymous linked list includes a page descriptor of an anonymous page that is not accessed in the recent time period. An end point of the recent time period is a current time point, and a length is a preset duration. During memory reclaiming, an anonymous page to be released (for example, referred to as a target memory page) may be determined from the inactive anonymous linked list, and is swapped to the swap partition. In addition, the anonymous pages in the inactive anonymous linked list may be arranged based on durations of the corresponding first time intervals. In this case, an anonymous page with a shorter first time interval is arranged at a position closer to a head of the linked list, and an anonymous page with a longer first time interval is arranged at a position closer to a tail of the linked list. The electronic device may preferentially determine an anonymous page close to the tail of the linked list as the target memory page.

The active anonymous linked list is used to place anonymous pages that are accessed in a recent time period. An anonymous page in the active anonymous linked list cannot be directly swapped to the swap partition. In some embodiments, a first time interval corresponding to the anonymous page in the active anonymous linked list is greater than a preset length. In other words, when the anonymous page is not accessed in the recent time period, the anonymous page may be placed in the inactive anonymous linked list.

The inactive file linked list is used to place file pages that are not accessed in a recent time period. During memory reclaiming, a system memory occupied by a file page in the inactive file linked list may be directly reclaimed. The inactive file linked list is similar to the inactive anonymous linked list, except a different type of memory page is placed therein.

The active file linked list is used to place file pages that are accessed in a recent time period. A system memory occupied by a file page in the active file linked list cannot be directly reclaimed. The active file linked list is similar to the active anonymous linked list, except that a different type of memory page is placed therein.

The non-reclaimable linked list is used to place locked memory pages, which cannot be reclaimed. These pages may be anonymous pages or may be file pages.

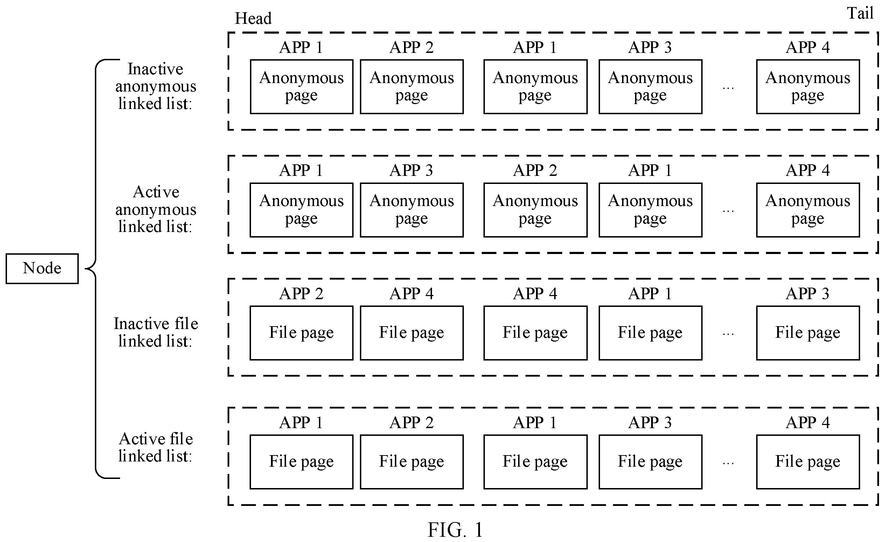

As shown in FIG. 1, the electronic device includes an APP 1, an APP 2, an APP 3, and an APP 4 that are being run. The APP 1, the APP 2, the APP 3, and the APP 4 may be run at the foreground, or may be run at the background. This is not specifically limited in this example. For example, as shown in FIG. 1, in memory pages corresponding to the APP 1, the APP 2, the APP 3, and the APP 4, anonymous (inactive anonymous) pages that are not accessed in a recent time period are placed in an inactive anonymous linked list corresponding to a node. For example, in the memory pages corresponding to the APP 1, the APP 2, the APP 3, and the APP 4, anonymous (active anonymous) pages that are accessed in the recent time period are placed in an active anonymous linked list of the node. For example, in the memory pages corresponding to the APP 1, the APP 2, the APP 3, and the APP 4, file pages (inactive file) that are not accessed in the recent time period are placed in an inactive file linked list of the node. For example, in the memory pages corresponding to the APP 1, the APP 2, the APP 3, and the APP 4, file pages (active file) that are accessed in the recent time period are placed in an active file linked list of the node. For example, in the memory pages corresponding to the APP 1, the APP 2, the APP 3 and the APP 4, locked (unevictable) memory pages are placed in a non-reclaimable linked list of the node.

In a scenario in which a system memory occupied in the electronic device exceeds a corresponding memory waterline, the electronic device may traverse the inactive anonymous linked list and the inactive file linked list corresponding to the node, and select a target memory page that may be released (for example, deleted or swapped to the swap partition and compressed). For example, a memory page located at a tail of the inactive anonymous linked list or a memory page located at a tail of the inactive file linked list is used as the target memory page.

When the target memory page is a file page, the file page may be deleted, and a system memory occupied by the file page is reclaimed. If the target memory page is an anonymous page, the anonymous page is swapped to the swap partition, and is compressed. In this way, the system memory occupied by the target memory page may be reclaimed, which may also be referred to as system memory reclaiming.

In a subsequent embodiment, a description is provided by using an example in which the to-be-released target memory page is an anonymous page. In the subsequent embodiment, determining a target memory page from an LRU linked list of an application may mean determining the target memory page from an inactive anonymous linked list.

In some other embodiments, the electronic device may manage, by using a memory control subsystem (memory cgroup, memcg) mechanism, system memories occupied by different applications. In this case, the electronic device may create a memcg for each application. Each application corresponds to a data node, and different applications correspond to different data nodes. In addition, each data node corresponds to a plurality of LRU linked lists, and memory pages of a same application are placed in LRU linked lists of a same data node.

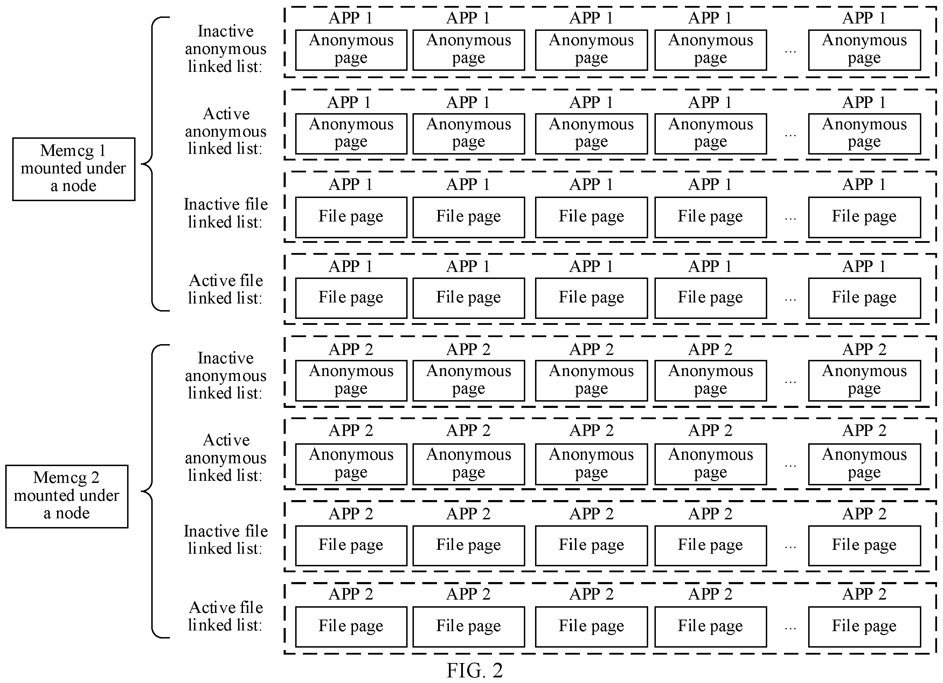

As shown in FIG. 2, the electronic device includes an APP 1 and an APP 2 that are being run. The APP 1 the APP 2 may be run at the foreground, or may be run at the background. This is not specifically limited in this example.

For example, as shown in FIG. 2, a memcg 1 is mounted under a node in the electronic device. The memcg 1 is used to manage memory pages corresponding to the APP 1, and anonymous pages that are not accessed in a recent time period are placed in an inactive anonymous linked list corresponding to the memcg 1.

As shown in FIG. 2, in memory pages corresponding to the APP 1, anonymous pages that are accessed in the recent time period are placed in an active anonymous linked list of the memcg 1. In the memory pages corresponding to the APP 1, file pages that are not accessed in the recent time period are placed in an inactive file linked list of the memcg 1. In the memory pages corresponding to the APP 1, file pages that are accessed in the recent time period are placed in an active file linked list of the memcg 1. In the memory pages corresponding to the APP 1, locked memory pages are placed in a non-reclaimable linked list of the memcg 1.

As shown in FIG. 2, a memcg 2 is mounted under a node in the electronic device. In memory pages corresponding to the APP 2, anonymous pages that are accessed in a recent time period are placed in an active anonymous linked list of the memcg 2. In the memory pages corresponding to the APP 2, file pages that are not accessed in the recent time period are placed in an inactive file linked list of the memcg 2. In the memory pages corresponding to the APP 2, file pages that are accessed in the recent time period are placed in an active file linked list of the memcg 2. In the memory pages corresponding to the APP 2, locked memory pages are placed in a non-reclaimable linked list of the memcg 2. Certainly, when more applications are run in the electronic device, the electronic device may include more data nodes, and a memory page of a corresponding application is placed in an LRU linked list of each data node.

In a scenario in which a system memory occupied by the electronic device exceeds a corresponding memory waterline, the electronic device may successively traverse the LRU linked list corresponding to each data node, select a target memory page, and reclaim a system memory occupied by the target memory page. When the system memory satisfies a preset condition, traversing of the LRU linked lists corresponding to the remaining data nodes is stopped. The preset condition may be: a system memory occupation after reclaiming is not greater than a memory waterline, or a difference between the memory waterline and the system memory occupation after reclaiming is not less than a preset threshold.

It may be understood that, after the electronic device adopts the memcg mechanism for system memory management, a system memory management granularity of the electronic device may be refined to an application level. Currently, the memcg mechanism achieves application in most electronic devices.

However, for an electronic device in which the memcg mechanism is enabled, if the electronic device has a plurality of applications that are run in the background, memory reclaiming is vulnerable to a problem that a system memory occupied by an application having a relatively high use probability may be reclaimed while a system memory occupied by an application having a relatively low use probability is not reclaimed may occur.

It may be understood that during memory reclaiming, the electronic device indiscriminately traverses an LRU linked list of each application, to determine a target memory page that may be released. In this case, an LRU linked list of an application having a relatively high use probability may be traversed before an LRU linked list of an application having a relatively low use probability. In addition, after reclaiming of the system memory occupied by the application having a relatively high probability is completed, if the system memory satisfies the preset condition, reclaiming of a system memory occupied by another application is stopped. Therefore, when the LRU linked list of the application having a relatively high use probability is traversed before the LRU linked list of the application having a relatively low use probability, a case that the system memory occupied by the application having a relatively high use probability is reclaimed while the system memory occupied by the application having a relatively low use probability is not reclaimed occurs.

In addition, an access probability of a target memory page determined from the LRU linked list of the application having a relatively high use probability is lower than access probabilities of other memory pages of the application but higher than access probabilities of memory pages of the application having a relatively low use probability. After a system memory occupied by the target memory page of the application having a relatively high use probability is reclaimed, the target memory page may be loaded back to the system memory only after a short time, and even memory reclaiming may be triggered again. Clearly, memory pressure is not relieved, but a service life of a storage device is even affected.

An example in which a system memory occupied by an anonymous page 1 of the APP 1 is reclaimed during a period in which the APP 1 and the APP 2 are kept alive and run in the background is used. If a use probability of the APP 1 is higher than a use probability of the APP 2, during memory reclaiming, the LRU linked list corresponding to the APP 1 is first traversed, and the anonymous page 1 is determined as the target memory page. After the anonymous page 1 is swapped to a swap partition (or an external memory), it is determined that a system memory after the reclaiming satisfies the preset condition, and the electronic device does not further reclaim a system memory occupied by the APP 2.

Then, if the electronic device detects an operation of instructing to run the APP 1 at the foreground performed by the user, the electronic device needs to reload the anonymous page 1 back to the system memory from the swap partition (or the external memory). In this process, a time interval from swapping to the swap partition or the external memory to reloading back to the system memory may be referred to as a reload interval.

It may be understood that, because the use probability of the APP 1 is higher than the use probability of the APP 2, a probability that the anonymous page 1 of the APP 1 is accessed is higher than that of an anonymous page 2 of the APP 2. The anonymous page 2 is a memory page placed in the inactive anonymous linked list corresponding to the APP 2. Because the system memory satisfies the preset condition after the anonymous page 1 is reclaimed, the electronic device does not further reclaim a system memory occupied by the anonymous page 2. Because the access probability of the anonymous page 2 is lower than the access probability of the anonymous page 1, a reload interval corresponding to the anonymous page 1 is more likely to be shorter than a re-load interval corresponding to the anonymous page 2. However, because the electronic device reclaims only the anonymous page 1 and does not reclaim the anonymous page 2, the anonymous page 2 occupies the system memory all the time, and the anonymous page 1 is reloaded to the system memory after being released. In this case, release and re-loading are repeated, which does not relieve memory pressure, and even reduces a life of the storage device.

In addition, for applications having a same use probability, because they are traversed not simultaneously but chronologically, a case that a system memory occupied by some applications is reclaimed while a system memory occupied by other applications is not reclaimed may occur. In an unequalized reclaiming scenario, if an application for which reclaiming is performed needs to be run in the foreground, a memory page that needs to be loaded back to the system memory is relatively large and requires a longer time.

To alleviate the foregoing technical problem, embodiments of this application provide a memory reclaiming method, which may be applied to an electronic device in which the memcg mechanism is enabled. In a scenario in which memory reclaiming needs to be performed, the electronic device may predetermine a to-be-reclaimed size of each application. A higher use probability of an application corresponds to a smaller to-be-reclaimed memory. A lower use probability of an application corresponds to a larger to-be-reclaimed memory. To-be-reclaimed memory sizes corresponding to applications having a same use probability are determined based on reclaimable memories sizes of the applications.

Then, during traversing of an LRU linked list of each application, a system memory occupied by the application is reclaimed based on the to-be-reclaimed memory size corresponding to the application.

In this way, the electronic device in which the memcg mechanism is enabled can achieve equalized system memory reclaiming, thereby avoiding a case that a memory page with a relatively high access probability is reclaimed while a memory page with a relatively low access probability is not reclaimed, reducing a reclaimed memory size of a single application, and improving efficiency of reloading a reclaimed memory page of an application.

For example, the foregoing electronic device may be a mobile phone, a tablet computer, a laptop computer, a handheld computer, a notebook computer, an ultra mobile personal computer (ultra-mobile personal computer, UMPC), a netbook, a personal digital assistant (personal digital assistant, PDA), an augmented reality (augmented reality, AR)/virtual reality (virtual reality, VR) device, or the like. A specific form of the electronic device is not specifically limited in embodiments of this application. In subsequent embodiments, a mobile phone configured with a Linux kernel is mainly used as an example for description.

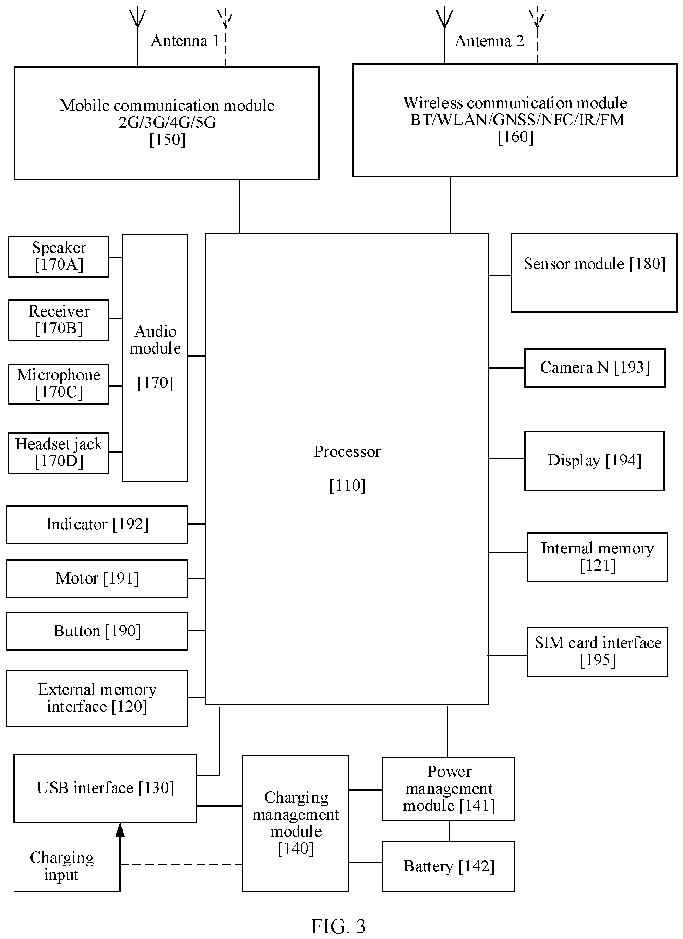

FIG. 3 is a schematic structural diagram of a mobile phone according to an embodiment of this application;

As shown in FIG. 3, the mobile phone may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The sensor module 180 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure illustrated in this embodiment does not constitute a specific limitation on the mobile phone. In some other embodiments, the mobile phone may include more or fewer components than those shown in the figure, or some merged components, or some split components, or different component arrangements. The components shown in the figures may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be devices independent of each other, or may be integrated to one or more processors.

The controller may be a neural center and command center of the mobile phone. The controller may generate an operation control signal based on instruction operation code and a timing signal, and control obtaining and executing of instructions.

A memory may be further arranged in the processor 110, to store instructions and data. In some embodiments, the memory in the processor 110 is a cache. The memory may store instructions or data recently or cyclically used by the processor 110. If the processor 110 needs to use the instructions or the data again, the processor may directly invoke the instructions or the data from the memory. This avoids repeated access, and reduces a waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, interface connection relationships between the modules shown in this embodiment are merely schematic descriptions and do not constitute a limitation on the structure of the mobile phone. In some other embodiments of this application, the mobile phone may alternatively use an interface connection manner different from that in the foregoing embodiment or use a combination of a plurality of interface connection manners.

The mobile phone may implement a display function through the GPU, the display 194, the application processor, and the like. The GPU is an image processing microprocessor, and is connected to the display 194 and the application processor. The GPU is configured to perform mathematical and geometric calculations for graphics rendering. The processor 110 may include one or more GPUs that execute a program instruction to generate or change display information.

The external memory interface 120 may be configured to connect to an external memory card such as a Micro SD card, to extend a storage capability of the mobile phone. The external memory card communicates with the processor 110 through the external memory interface 120, to implement a data storage function, for example, to store files such as music and videos into the external memory card.

The internal memory 121 may be configured to store computer-executable program code, where the executable program code includes instructions. The internal memory 121 may include a program storage area and a data storage area. In addition, the internal memory 121 may include a high-speed random access memory, or may include a non-volatile memory such as at least one disk storage device, a flash storage device, a universal flash storage (universal flash storage, UFS), or the like. The processor 110 executes various function applications and data processing of the mobile phone by running the instructions stored in the internal memory 121 and/or the instructions stored in the memory arranged in the processor.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flex light-emitting diode (flex light-emitting diode, FLED), a Miniled, a MicroLed, a Micro-oLed, a quantum dot light-emitting diode (quantum dot light-emitting diodes, QLED), or the like.

The mobile phone may implement a photographing function through the ISP, the camera 193, the video codec, the GPU, the display 194, the application processor, and the like.

The ISP is configured to process data fed back by the camera 193. For example, during shooting, a shutter is enabled. Light is transmitted to a photosensitive element of the camera through a lens, and an optical signal is converted into an electrical signal. The photosensitive element of the camera transmits the electrical signal to the ISP for processing, to convert the electrical signal into an image visible to a naked eye. The ISP may further perform algorithm optimization on a noise point, a luminance, and a skin tone of the image. The ISP may further optimize parameters such as exposure and a color temperature of a shooting scene. In some embodiments, the ISP may be arranged in the camera 193.

The camera 193 is configured to capture a still image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the mobile phone may include N cameras 193, where N is a positive integer greater than 1.

The digital signal processor is configured to process a digital signal. In addition to a digital image signal, the digital signal processor may process other digital signals. For example, when the mobile phone selects a frequency, the digital signal processor is configured to perform Fourier transform and the like on frequency energy.

The video codec is configured to compress or decompress a digital video. The mobile phone supports one or more types of video codecs. In this way, the mobile phone can play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, which is configured to quickly process input information by using a biological neural network structure, for example, a transmission mode between neurons in a human brain, and may further perform continuous self-learning. The NPU may be configured to implement an application such as intelligent cognition of the mobile phone, for example, image recognition, facial recognition, voice recognition, and text understanding.

A software system developed based on the Linux kernel is run above the foregoing components. The software system may adopt a hierarchical architecture, an event-driven architecture, a microkernel architecture, a microservice architecture, a cloud architecture, or the like. In this embodiment of this application, the software system architecture of the mobile phone is described by using an Android system with a hierarchical architecture as an example.

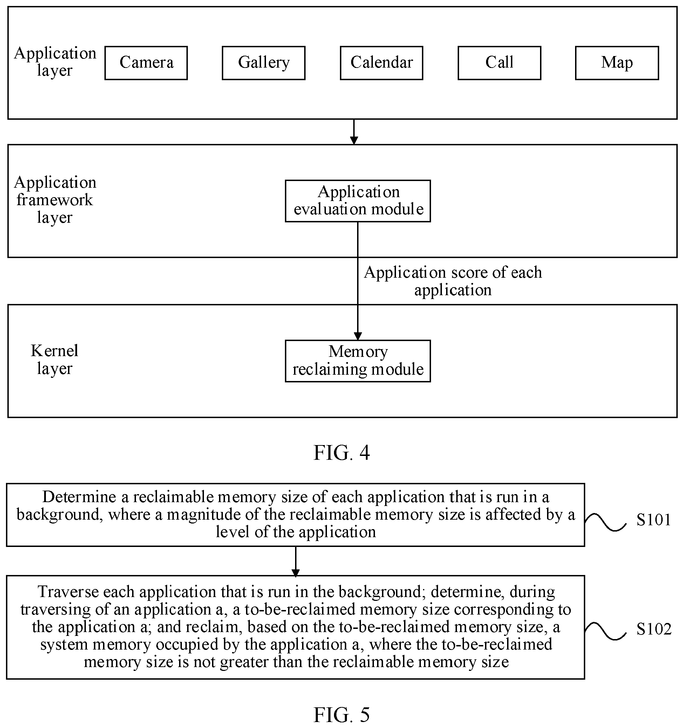

As shown in FIG. 4, the software system architecture includes an application (Application, APP) layer, an application framework layer (which may also be referred to as an application framework layer or a Framework), and a kernel (Kernel) layer.

For example, the application layer may include a series of application packages. As shown in FIG. 4, the application packages may include applications such as camera, gallery, calendar, call, and map.

For example, the application framework layer provides an application programming interface (application programming interface, API) and a programming framework for the applications in the application layer. The application framework layer includes some predefined functions.

In addition, the application framework layer may further manage applications, and record a running status (for example, a status such as foreground, background, or stopping running) of each application, a state switching time point, and the like.

In some embodiments, as shown in FIG. 4, the application framework layer further includes an application evaluation module. The application evaluation module can obtain a running status of an application and a state switching time point from the application framework layer. In addition, the application evaluation module may further calculate an application score corresponding to each application based on a running status and a state switching time point and according to a pre-configured rule. Different application scores correspond to different use probabilities, and same application scores correspond to same use probabilities. In addition, a change trend of an application score may indicate a change trend of a use probability. For example, a higher application score indicates a lower use probability of an application, and a lower application score indicates a higher use probability of an application. Certainly, in other embodiments, a higher application score may indicate a higher use probability of an application and a lower application score may indicate a lower use probability of an application, which specifically depends on a rule for calculating an application score. This is not specifically limited in this embodiment of this application. In subsequent embodiments, a description is provided by using an example in which a higher application score indicates a lower use probability and a lower application score indicates a higher use probability.

For example, the kernel layer is a layer between hardware and software, which provides interaction with the hardware. The kernel layer may include various functional modules and drivers.

As shown in FIG. 4, the kernel layer includes a memory reclaiming module. After obtaining application scores from the application evaluation module, the memory reclaiming module may determine a size of a memory to be reclaimed from a system memory occupied by each application. For a process of determining a to-be-reclaimed memory size, refer to subsequent embodiments, and details are not described herein. Then, during traversing of an LRU linked list of each application, a system memory occupied by the application is reclaimed based on the to-be-reclaimed memory size of each application.

In addition, the memory reclaiming module may further monitor a memory status of the electronic device, and trigger a memory reclaiming process when detecting that a memory reclaiming condition is satisfied. The memory reclaiming condition may include that a system memory occupation exceeds a memory waterline.

It may be understood that the foregoing software system architecture may further include layers that are not shown in FIG. 4, for example, a HAL layer, Android runtime, and a system library, which are not described in detail herein.

A memory reclaiming process performed by the electronic device in which the memcg mechanism is enabled in embodiments of this application is described below in combination with drawings.

In embodiments of this application, the electronic device can evaluate an application score of an application that is run in the background.

In some embodiments, the electronic device may periodically evaluate the application score corresponding to the application that is run in the background.

In an implementation, a manner of evaluating the application score corresponding to the application that is run in the background is as follows:
S1: The application evaluation module may obtain a running status and a state switching time point of each application from the application framework layer every preset duration.

The application evaluation module may determine, based on the running status of each application, an application that is currently run in the background. The application evaluation module may further determine, based on the state switching time points of the application that is run in the background, a latest time point of switching to background running. Then, the application evaluation module may further determine, based on a current system time and the latest time point of switching to background running, a current background running duration corresponding to the application that is run in the background. In addition, the application evaluation module may further determine, based on the state switching time point, a use frequency corresponding to each application that is run in the background. For example, the use frequency may be a quantity of times each application is switched to foreground running in a specified time period. The specified time period may be a time period between a first time point and a current time point. The first time point may be early morning of a current day, or may be a time point that is spaced apart from the current time point by a specified time length. In addition, the application evaluation module may further predict user habits of a user for each application based on the state switching time point, for example, a frequent use time period of the application, or a plurality of groups of applications a user frequently turns to use.

S2: The application evaluation module may further evaluate, after obtaining the running status and the state switching time point of each application, a score corresponding to the application in terms of application type, background running duration, use frequency, use habit, and the like.

In some embodiments, the application evaluation module may evaluate, based on running record data of the application, the score corresponding to the application in terms of application type, background running duration, use frequency, use habit, and the like. The running record data may include a time point of foreground running of the application, a time point of background running of the application, application service providing status information during the background running, and the like.

Evaluation of a score in terms of application type is used as an example. A score of a first-type application in terms of application type is a value 1, and a score of a non-first-type application in terms of application type is a value 2, where the value 1 is less than the value 2.

The first type may indicate an application in a particular state. For example, the particular state may be that an application is run in the background and normally provides a corresponding application service. In this case, in an example scenario in which a music application is run in the background, music is normally played, and a score of the music application in terms of application type is determined as the value 1.

In other embodiments, the first type may indicate an application having a particular identifier. For example, the particular identifier may be an identifier assigned to the application in response to a selection operation performed by the user on the application in advance, and the particular identifier may be used for distinguishing from an application that is not selected by the user in advance.

Evaluation of a score in terms of background running duration is used as an example. An application with a longer background running duration has a higher score in terms of background running duration, and an application with a shorter background running duration has a lower application score corresponding to a score in terms of background running duration. Different background running durations and corresponding different scores may be pre-configured in the electronic device. In this way, a score of the application in terms of running duration may be obtained through matching based on the background running duration of the application.

Evaluation of a score in terms of use frequency is used as example. An application with a lower use frequency has a higher score in terms of use frequency, and an application with a higher use frequency has a lower application score corresponding to a score in terms of use frequency.

Evaluation of a score in terms of usage habit is used as an example. If a use habit corresponding to an application indicates that the application is to be used in a current scenario, a score in terms of application type is a value 3, and if a use habit corresponding to an application indicates that the application is not to be used in a current scenario, a score in terms of application type is a value 4, where the value 4 is greater than the value 3.

S3: The application evaluation module may obtain, after obtaining the score of the application in each dimension, an application score corresponding to the application through fitting based on the score corresponding to each dimension.

In some embodiments, the scores corresponding to the dimensions may be fitted by using a pre-configured algorithm, to obtain the application score corresponding to the application. For example, the scores in the dimensions may be processed with reference to weights in different dimensions, and then the processed scores are added up to obtain the application score.

In some other embodiments, when a running status of any application changes, the electronic device may be triggered to evaluate an application score corresponding to the application that is run in the background. For example, when an application that is run in the foreground is switched to being run in the background, the electronic device may be triggered to evaluate an application score corresponding to the application that is currently run in the background.

In some other embodiments, the electronic device not only may periodically evaluate the application score corresponding to the application that is run in the background, but also may trigger, when any application is switched from being run in the foreground to being run in the background, evaluation of an application score corresponding to the application.

In this embodiment of this application, after the application score of the application that is run in the background is determined, the electronic device may further determine a to-be-reclaimed memory size corresponding to each application that is run in the background.

For example, each time the application evaluation module obtains an application score of an application, the application evaluation module may send the application score to the memory reclaiming module.

For another example, when the memory reclaiming module identifies that memory reclaiming needs to be performed, the memory reclaiming module obtains the application score of each application that is run in the background from the application evaluation module.

In an implementation, the memory reclaiming module in the electronic device may calculate, based on the application scores from the application evaluation module, a to-be-reclaimed memory size corresponding to each application that is run in the background.

In some embodiments, as shown in FIG. 5, a process of calculating the to-be-reclaimed memory size corresponding to each application that is run in the background is as follows:
S101: Determine a reclaimable memory size of each application that is run in the background, where a magnitude of the reclaimable memory size is affected by a level of the application.

The level of the application may indicate activeness of the application during running in the background. For example, a higher use probability of an application (or a higher probability of being switched to being run in the foreground) corresponds to a higher application level, and a lower use probability of an application (or a lower probability of being switched to being run in the foreground) corresponds to a lower application level.

For example, the application level of the application may be indicated by an application score of the application. The application score evaluation process in the foregoing embodiment may also be evaluation on an application level. Certainly, a higher application score indicates a lower application level corresponding to the application, and a lower application score indicates a higher application level corresponding to the application. During actual running, an application score of an application may decrease as an application level increases, and may increase as an application level decreases.

In some embodiments, a higher application score indicates a larger value of a determined reclaimable memory size, and a lower application score indicates a smaller value of a determined reclaimable memory size.

In some other embodiments, in addition to being affected by an application level, a reclaimable memory size of an application may be further affected by a size of anonymous pages that are transferred from the application.

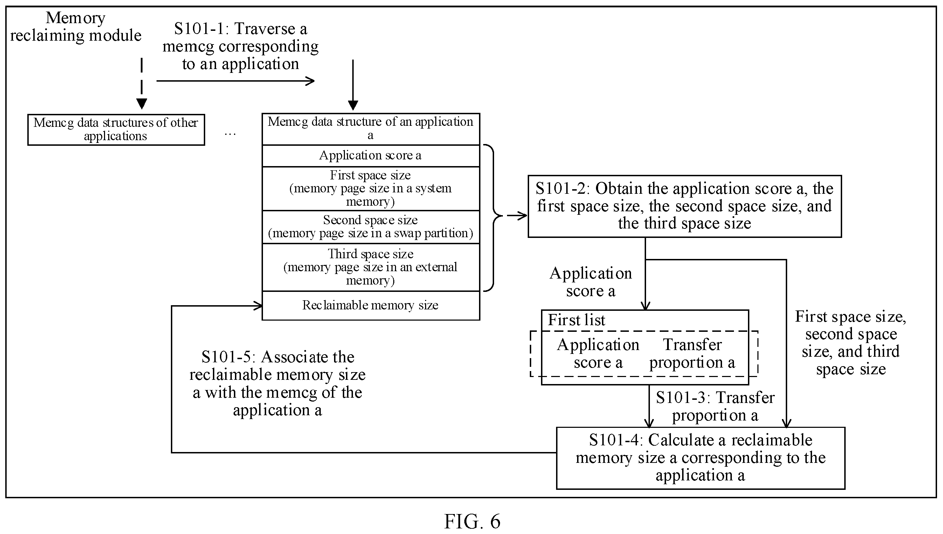

As shown in FIG. 6, S101 may further include the following substeps:
S101-1: Traverse a memcg corresponding to each application that is run in the background.

In some embodiments, the memory reclaiming module may traverse memcg data structure corresponding to the application that are run in the background. For example, the memcg data structure may include a data node configured to associate an LRU linked list, a field used to record an application identifier, and the like. The application identifier is used to uniquely indicate an application.

For another example, the memcg data structure may further include a field used to record an application score. To be specific, after determining the application score of the application, the application evaluation module may transmit the application score to the kernel layer, and write the application score into the field in the memcg data structure of the application used to record the application score.

For another example, the memcg data structure may further include data of another type, for example, an anonymous page of the application in a system memory and a storage space size of the anonymous page which is referred to as, for example, a first space size.

An anonymous page (for example, referred to as a compressed page) among anonymous pages of the application that is swapped to the swap partition and a storage space size of the compressed page in the swap partition which is referred to as, for example, as a second space size, or for another example, an anonymous page (for example, referred to as a transferred page) among the anonymous pages in the application that is swapped to an external memory and a storage space size of the transferred page in the external memory which is referred to as, for example, a third space size.

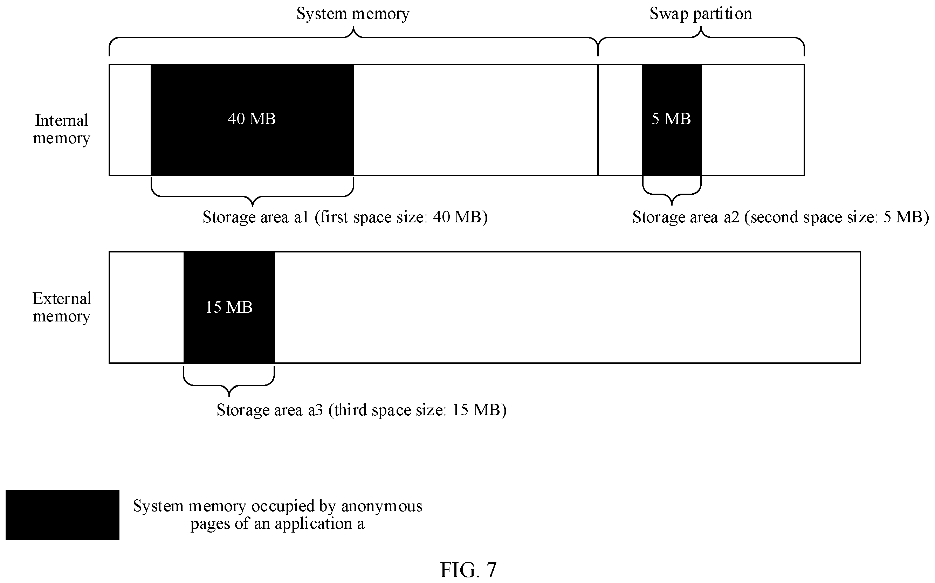

For example, as shown in FIG. 7, a storage area a1 in a system memory is a memory space in which an anonymous page of an application a is stored, a storage area a2 in a swap partition is a memory space in which a compressed page of the application a is stored, and a storage area a3 in an external memory is an external memory space in which a transferred page of the application a is stored. A space size of the storage area a1 is 40 MB, a space size of the storage area a2 is 5 MB, and a space size of the storage area a3 is 15 MB. In this case, in a memcg data structure of the application a, a corresponding first space size is 40 MB, a corresponding second space size is 5 MB, and a corresponding third space size is 15 MB.

In an implementation, the memory reclaiming module may perform matching based on an application identifier of an application that is run in the background, to obtain a memcg data structure corresponding to the application that is run in the background. Then, a memcg data structure of each application that is run in the background is traversed in sequence.

S101-2: Obtain, during traversing of a memcg of an application a, an application score a, a first space size, a second space size, and a third space size of the application a.

In some embodiments, the application a is an example of the application that is run in the background. It may be understood that during traversing of a memcg of another application that is run in the background, an application score, a first space size, a second space size, and third space size of the application may also be obtained.

In some embodiments, a sum of the first space size, the second space size, and the third space size of a first application may be referred to as a second memory size. The second memory size indicates a size of all anonymous pages of the application. A sum of the second space size and the third space size of the first application may be referred to as a third memory size. The third memory size indicates a size of anonymous pages of the application that are transferred.

In addition, the first space size, the second space size, the third space size, and the application score a that correspond to the application a may all be obtained from the memcg data structure corresponding to the application a. The second space size and the third space size may indicate a storage space occupied by anonymous pages of the application a that are swapped from the system memory.

S101-3: Query a pre-configured first list based on the application score a for a corresponding transfer proportion.

In some embodiments, a first list may be pre-configured in the electronic device. The first list may show transfer proportions corresponding to different application scores. For example, the application score a and the corresponding transfer proportion a are shown in the first list.

When the application a is the first application, a first score of the first application is the application score a, and it may be determined by using the first list that a transfer proportion corresponding to the first score is the transfer proportion a. In addition, a higher first score indicates a higher corresponding transfer proportion.

The transfer proportion may indicate a proportion of a size of transferable anonymous pages of the application to a size of all anonymous pages (including anonymous pages in the system memory, compressed pages in the swap partition, and transferred pages in the external memory). The size of the transferable anonymous pages is not less than a size of anonymous pages that are swapped to the swap partition and the external memory. In addition, in the first list, a higher application score corresponds to a larger transfer proportion, and a lower application score corresponds to a smaller transfer proportion. In this way, after determining the application score a of the application a, the memory reclaiming module may perform matching by using the application score a to obtain the transfer proportion a corresponding to the application score a from the first list.

S101-4: Calculate a reclaimable memory size a corresponding to the application a based on the transfer proportion a and the first space size, the second space size, and the third space size that correspond to the application a.

In some embodiments, the first space size, the second space size, and the third space size that correspond to the application a may be superimposed, to obtain the size corresponding to all anonymous pages of the application a. Then, the size of transferable anonymous pages is determined by using the transfer proportion a and the size corresponding to all of the anonymous pages. Then, a size of transferred anonymous pages is removed from the size of the transferable anonymous page, to obtain the reclaimable memory size a. The size of transferred anonymous pages is equal to the sum of the second space size and the third space size.

S101-5: Associate the reclaimable memory size a with the memcg of the application a if the reclaimable memory size a is not less than 0.

In some embodiments, the reclaimable memory size a (or referred to as a reclaimable memory amount) may be written into a field in the memcg data structure of the application a used to store the reclaimable memory size, so that the reclaimable memory size a is associated with the memcg of the application a.

It may be understood that theoretically, the reclaimable memory size a is not less than 0. Certainly, during actual running, the reclaimable memory size a calculated based on the transfer proportion a and the first space size, the second space size, and the third space size that correspond to the application a may be less than 0. For example, in a scenario in which an application score of an application changes from a large value to a small value, when the application score is a large value, it indicates that some anonymous pages are swapped to the swap partition or the external memory. If the anonymous pages swapped to the swap partition or the external memory are not loaded back to the system memory before the application score changes to a small value, after the application score changes to a small value, a "size of transferable anonymous pages" calculated based on a transfer proportion corresponding to the small application score may be less than an actual size of transferred anonymous pages. A value of the reclaimable memory size a determined based on S101-4 may be less than 0. In this case, the value of the calculated reclaimable memory size a may be modified to 0. After the value of the reclaimable memory size a is modified to 0, the reclaimable memory size a may be associated with the memcg of the application a.

In the foregoing embodiment, a higher application score corresponds a larger reclaimable memory size determined in the foregoing manner, and a lower application score corresponds to a smaller reclaimable memory size determined in the foregoing manner. In this case, an application having a higher use probability corresponds to a smaller reclaimable memory size (a maximum reclaimable memory size), which prevents an excessively large memory from being reclaimed from a system memory occupied by an application having a high use probability, and provides a condition for implementing equalized reclaiming of a system memory occupied by each application.

In an implementation, an algorithm for determining a reclaimable memory size of the of each application may be as follows:
do {
   score = memcg_score;//it instructs to obtain an application score of a traversed application;
ub_mem2zram = memcg_ub_mem2zram//it instructs to obtain a corresponding transfer proportion based on the application score;
   anon = memcg_inactive_anon + memcg_active_anon; // it instructs to obtain a total quantity of all anonymous pages of the application in a system memory, for example, obtain a total size of all anonymous pages of the application that are placed in an active anonymity linked list and an inactive anonymity linked list;
   zram = memcg_zram//it instructs to obtain a size of anonymous pages of the application in a swap partition;
   eswap = memcg_eswap//it instructs to obtain a size of anonymous pages of the application stored in an external memory;
   ub_mem2zram = memcg_ub_mem2zram;
   can_reclaim_memcg = (anon + zram + eswap) * ub_mem2zram- (zram + eswap);//it instructs to calculate a size of transferable anonymous pages of the application, that is, the reclaimable memory size of the application mentioned in the foregoing embodiment;
   can_reclaim_memcg = can_reclaim_memcg > 0 ? can_reclaim_memcg:0//it instructs to modify a value of the reclaimable memory size of the application to 0 if the reclaimable memory size is less than 0; and
   level_can_reclaim[score] += can_reclaim_memcg//it instructs to calculate a total reclaimable memory size corresponding to applications having a same application score, for example, a reclaimable memory size corresponding to an application set mentioned in the foregoing embodiment;
   total_can_reclaim + = can _reclaim_memcg; //it instructs to calculate a reclaimable memory size corresponding to all applications;
}while(memcg = memcg_next ,memcg != NULL); //It ends after all applications are traversed.

It may be understood that the reclaimable memory size is a maximum memory size that may be reclaimed from a system memory occupied by an application determined based on application score. After the reclaimable memory sizes corresponding to all of the applications are obtained, the process may proceed to S102.

S102: Traverse each application that is run in the background; determine, during traversing of the application a, a to-be-reclaimed memory size corresponding to the application a; and reclaim, based on the to-be-reclaimed memory size, a system memory occupied by the application a, where the to-be-reclaimed memory size is not greater than the reclaimable memory size.

The to-be-reclaimed memory size is a memory size reclaimed from the system memory occupied by the application during actual memory reclaiming, or may be briefly referred to as a memory size that needs to be reclaimed from the application. A value of the to-be-reclaimed memory size is limited by the foregoing reclaimable memory size which is affected by an application level. In this case, a to-be-reclaimed memory size corresponding to each application is affected by an application level, thereby preventing an excessively large system memory from being reclaimed from an application with a relatively high application level.

In addition, a to-be-reclaimed memory size corresponding to the first application may be referred to as a first memory size, and a to-be-reclaimed memory size corresponding to the second application may be referred to as a sixth memory size. The first memory size is affected by an application level of the first application. A higher application level of the first application corresponds to a lower first memory size, and a lower application level of the first application corresponds to a higher first memory size. In conclusion, the first memory size decreases as the application level of the first application increases. Certainly, the first memory size is further limited by the reclaimable memory size of the first application (that is, the first reclaimable memory size), which prevents an excessively large total system memory from being reclaimed from the first application after memory reclaiming a plurality of times when the application level of the first application is relatively high.

Similarly, the second memory size is affected by an application level of the second application. A higher application level of the second application corresponds to a lower second memory size, and a lower application level of the second application corresponds to a higher second memory size. In conclusion, the second memory size decreases as the application level of the second application increases. Certainly, the second memory size is also limited by a reclaimable memory size of the second application (that is, a second reclaimable memory size).

In addition, in a scenario in which the first space size, the second space size, and the third space size that correspond to the first application are the same as those of the second application, if the application level of the second application is lower than the application level of the first application, the second memory size is greater than the first memory size.

In some embodiments, a process of determining the to-be-reclaimed memory size corresponding to each application may be as follows:
A1: Divide the applications that are run in the background into a plurality of application sets based on the application scores, where an application set a defined through division includes the application a.

In some embodiments, applications having a same application score may be assigned into a same application set, and applications having different application scores may belong to different application sets.

In some other embodiments, a plurality of consecutive score intervals may be defined through division in advance, and then applications whose application scores belong to a same score interval are assigned into a same application set. In subsequent embodiments, a description is provided mainly by using a manner in which applications with a same application score are to be assigned into a same group.

A2: Determine a current total to-be-reclaimed memory size.

In some embodiments, the memory reclaiming module may obtain a currently occupied system memory size and a memory waterline. The total to-be-claimed memory size is obtained based on the currently occupied system memory size and the memory size indicated by the memory waterline.

In some other embodiments, each time the electronic device performs memory reclaiming, a reclaimed memory size is a fixed size. In this scenario, the memory reclaiming module may obtain a pre-configured memory size value as the total to-be-reclaimed memory size.

In another embodiment, the memory reclaiming module may obtain the currently occupied system memory size and a target memory size, and determine the total to-be-reclaimed memory size based on a difference between the currently occupied system memory size and the target memory size. The target memory size may be less than a memory size indicated by the memory waterline. The target memory size refers to an occupied system memory size reserved after each memory reclaiming. The target memory size may be a fixed value, or may be a variable value. For example, the target memory size may be determined based on an actual available system memory size and a set proportion. In a scenario in which the actual available system memory decreases, the target memory size may also be changed.

A3: Determine, based on the total to-be-reclaimed memory size, a memory size to be reclaimed from a system memory occupied by each application set, which is referred to as a fourth space size.

In some embodiments, a fourth space size corresponding to each application set may be assigned based on an application score corresponding to each application set. A higher application score corresponding to an application set corresponds to a larger fourth space size, and a lower application score corresponding to an application set corresponds to a smaller fourth space size.

In this implementation, system memory reclaiming may be performed differently for application sets having different application scores, to reduce a problem of unequalized system memory reclaiming, that is, a problem that a relatively large system memory is reclaimed from an application set with a high use frequency while only a relatively small system memory is reclaimed from an application set with a low use frequency.

In an implementation, the foregoing manner of assigning the corresponding fourth space size to each application set may include:
obtaining a matched assignment proportion table. A plurality of assignment proportion tables may be pre-configured in the electronic device. The assignment proportion table includes a plurality of application scores and corresponding assignment proportion values. Different assignment proportion tables correspond to different application scores. For example, different assignment proportion tables include different quantities of application scores, or at least one application score in different assignment proportion tables has different values. A sum of a plurality of assignment proportion values in a same assignment proportion table is 100%. In addition, in the assignment proportion table, a larger application score corresponds to a higher assignment proportion value, and a smaller application score corresponds to a lower assignment proportion value.

For example, an assignment proportion table 1 includes an application score 1, an application score 2, and an application score 3. In a scenario in which the application score 1 is greater than the application score 2 and the application score 2 is greater than the application score 3, in the assignment proportion table 1, an assignment proportion value corresponding to the application score 1 may be 70%, an assignment proportion value corresponding to the application score 2 may be 20%, and an assignment proportion value corresponding to the application score 3 may be 10%.

For another example, an assignment proportion table 2 includes an application score 1 and an application score 4. In a scenario in which the application score 1 is greater than the application score 4, in the assignment proportion table 2, an assignment proportion value corresponding to the application score 1 may be 60%, and an assignment proportion value corresponding to the application score 4 may be 40%.

It may be understood that, pre-configuring a plurality of different assignment proportion tables may be used in scenarios in which different application sets are defined through division. Assignment proportion values in each assignment proportion table may be empirical values.

Among the plurality of assignment proportion tables, application scores included in the matched assignment proportion table are the same as application scores of actual application sets defined through division. Therefore, matched assignment proportion tables determined in different application set defining scenarios are different.

For example, the actual application sets defined through division include an application set 1, an application set 2, and an application set 3, the application set corresponds to an application score 1, the application set 2 corresponds to an application score 2, and the application set 3 corresponds to an application score 3. In this scenario, the matched assignment proportion table may be an assignment list 1. Application scores (an application score 1, an application score 2, and an application score 3) in the assignment list 1 are completely the same as the application scores of the current actual application sets defined through division (the application set 1, the application set 2, and the application set 3). The actual application sets defined through division include an application set 1 and an application set 4, the application set corresponds to an application score 1, and the application set 4 corresponds to an application score 4. In this scenario, the matched assignment proportion table may be an assignment list 2. Application scores (an application score 1 and an application score 4) in the assignment list 2 are completely the same as the application scores of the current actual application sets defined through division (the application set 1 and the application set 4).

After the matched assignment proportion table is determined, a corresponding assignment proportion value is obtained through query based on the application score of each application set defined through division. Then, a fourth space size corresponding to the application set is determined based on a product of the assignment proportion value and the total to-be-reclaimed memory size.

In this way, different application sets, a to-be-reclaimed memory size (for example, the fourth space size) is affected by an application score. For an application set having a relatively high use probability (corresponding to a relatively low application score), a to-be-reclaimed memory size is relatively small, and for an application set having a relatively low use probability (corresponding to a relatively low application score), a to-be-reclaimed memory size is relatively large. Therefore, a case that an excessively large memory is reclaimed from an application having a relatively high use probability while an excessively small memory is reclaimed from an application having a relatively low use probability is avoided.

In another implementation, the foregoing manner of assigning the corresponding fourth space size to each application set may further include the following:
(1) A total reclaimable memory size corresponding to each application set is calculated based on reclaimable memory sizes of applications in each application set, which is, for example, referred to as a fifth space size or a fourth memory size. For example, reclaimable memory sizes of all applications in a same application set are added up, to obtain a fifth space size corresponding to the application set.
(2) A total reclaimable memory size corresponding to the electronic device is then calculated based on the fifth space size corresponding to each application set, which is referred to as a sixth space size. For example, fifth space sizes corresponding to all application sets are added up, to obtain the sixth space size corresponding to the electronic device.
(3) The fourth space size corresponding to the application set is determined based on the sixth space size corresponding to the electronic device, the fifth space size of the application set, and the total to-be-claimed memory space. For example, a reclaiming proportion corresponding to the application set is determined based on a proportion of the fifth space size of the application set to the sixth space size of the electronic device, and then the fourth space size corresponding to the application set is determined based on a product of the reclaiming proportion of the application set and the total to-be-reclaimed memory size.

In this way, for different application sets, a to-be-reclaimed memory size (for example, the fourth space size) is affected not only by an application score, but also by a reclaimable memory size of the application set. For an application set having a relatively high use probability (corresponding to a relatively low application score), a to-be-reclaimed memory size is relatively small, and for an application set having a relatively low use probability (corresponding to a relatively low application score), a to-be-reclaimed memory size is relatively large. Therefore, a case that an excessively large memory space is reclaimed from an application with a relatively high use probability while an excessively small memory space is reclaimed from an application with a relatively low use probability is avoided.

A4: Determine a to-be-reclaimed memory size corresponding to an application based on a fourth space size corresponding to an application set to which the application belongs, a total reclaimable memory size corresponding to the application set, and a reclaimable memory size corresponding to the application.

The total reclaimable memory size corresponding to the application set may also be referred to as a fifth space size.

For example, a proportion 1 (for example, referred to as a first proportion) of the reclaimable memory size a corresponding to the application a to a fifth space size corresponding to the application set a may be obtained, and then a product of the proportion 1 and a fourth space size (for example, referred to as a fifth memory size) corresponding to the application set a is obtained and used as a to-be-reclaimed memory size corresponding to the application a. Certainly, a to-be-reclaimed memory size corresponding to another application in the application set a may be determined in the same manner.

It may be understood that the fourth space size of each application set obtained through A1 to A3 may be constant during traversing of applications. After A1 to A3 are performed, the fourth space size of each application set may be stored. Subsequently, during traversing of any application, a fourth space size of a corresponding application set may be found through query, and then a to-be-reclaimed memory size of the application is calculated based on A4.

In other embodiments, application sets may not be defined through division in the electronic device. In this case, in another implementation, the process of determining the to-be-reclaimed memory size corresponding to each application may be as follows:
B1: Obtain, during traversing of each application that is run in the background, an application score of the application that is being traversed. For example, if the application a is being traversed, the application score a is obtained.
B2: Calculate a sum of reclaimable memory sizes of all applications corresponding to the application score a, to obtain a fifth space size (for example, referred to as a first proportion) corresponding to the application score a.
B3: Calculate a sum of reclaimable memory sizes of all applications in the electronic device, to obtain a sixth space size, which, for example, is referred to as a total reclaimable memory amount.
B4: Determine a current total to-be-reclaimed memory size, where for a manner of obtaining the current total to-be-reclaimed memory size, refer to A2 described above, and details are not described herein.
B5: Determine a to-be-reclaimed memory size of all applications corresponding to the application score a based on the sixth space size, the total current total to-be-reclaimed memory size, and a fifth space size corresponding to the application score a, that is, obtain a fourth space size corresponding to the application score a.
B6: Determine, after the fourth space size corresponding to the application score a is obtained, a to-be-reclaimed memory size corresponding to the application a based on the fourth space size and the fifth space size of the application score a and the reclaimable memory size a corresponding to the application a. Subsequently, a next application is traversed, and the foregoing steps are repeated.

It may be understood that the to-be-reclaimed memory size is a size of a space that actually needs to be reclaimed from an application. After the to-be-reclaimed memory size is calculated in the foregoing manner, equalized memory reclaiming can be performed on applications in a same application set. Certainly, in a same application set, a larger reclaimable memory size of an application corresponds to a larger to-be-reclaimed memory size, and a smaller reclaimable memory size of an application corresponds to a smaller to-be-reclaimed memory size.

In this embodiment of this application, after determining the to-be-reclaimed memory size corresponding to an application, the electronic device may further reclaim, based on the to-be-reclaimed memory size, a system memory occupied by the application.

For example, the reclaiming process includes the follows: During traversing of a memcg corresponding to the application a, the to-be-reclaimed memory size corresponding to the application a is determined. Then, n target memory pages are selected from an LRU linked list corresponding to the application a, where activeness of the selected target memory pages is lower than that of other anonymous pages of the application a.

In addition, a system memory occupation of the n target memory pages is the same as or similar to the to-be-reclaimed memory size. When the system memory occupation of the n target memory pages is similar to the to-be-reclaimed memory size, the system memory occupation of the n target memory pages is not less than the to-be-reclaimed memory size. Alternatively, a size of a memory occupied by the n target memory pages matches the to-be-reclaimed memory size corresponding to the application a.

For example, n may be a positive integer greater than 0. When n is equal to 1, a size of a system memory occupied by corresponding target memory pages is not less than the to-be-reclaimed memory size corresponding to the application a. When n is greater than 1, a total size of system memories occupied by corresponding n target memory pages is not less than the to-be-reclaimed memory corresponding to the application a, and a total size of system memories occupied by corresponding n-1 target memory pages is less than the to-be-reclaimed memory size corresponding to the application a. Then the system memory occupied by the target memory pages of the application a is reclaimed.

In some embodiments, during traversing of a memcg of an application, if an actual reclaimed memory size is equal to or greater than a to-be-reclaimed memory size, the traversing is stopped.

In some embodiments, during traversing of each memcg, after a corresponding target memory page is determined and reclaimed, a memory size (for example, referred to as a seventh space size) occupied by the target memory page may be obtained. Then, a difference between a reclaimable memory size of the application and the seventh space size, which is referred to as an eighth space size, is obtained. Then, the eighth space size is written into a field in the memcg data structure for storing a reclaimable size.

In this way, the step of calculating the reclaimable memory size of the application does not need to be repeated when an application score of the application is not changed, thereby reducing a time spent in memory reclaiming.

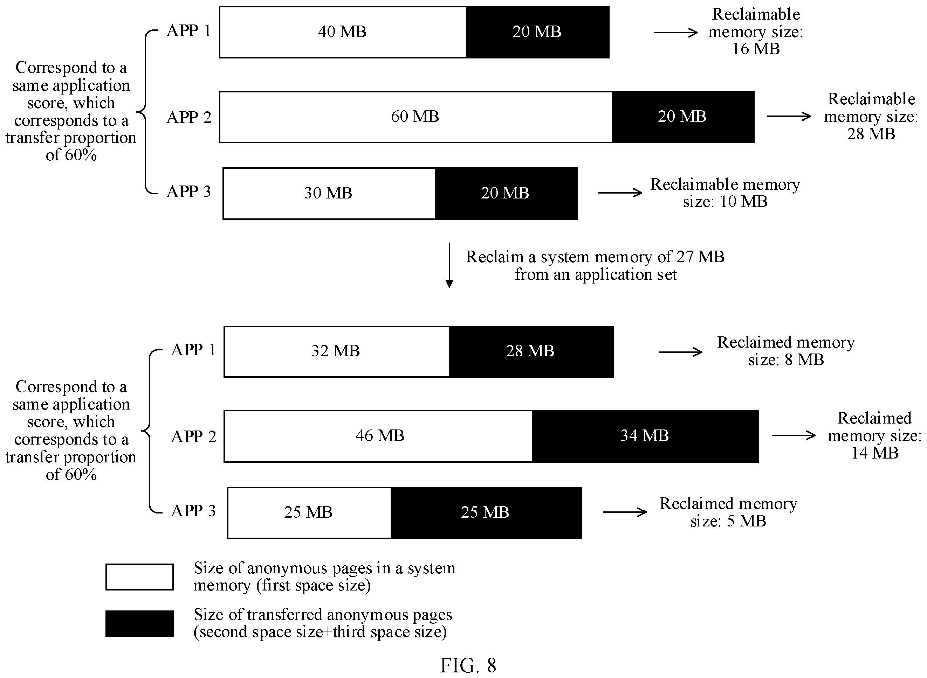

For example, as shown in FIG. 8, application scores corresponding to an APP 1, an APP 2, and an APP 3 are the same, and a transfer proportion in a first list corresponding to the application score is 60%. In the scenario shown in FIG. 8, a size of anonymous pages of the APP 1 in a system memory is 40 MB, and a size of transferred anonymous pages (that is, a size of a space occupied in the swap partition and the external memory) is 20 MB. A size of anonymous pages of the APP 2 in the system memory is 60 MB, and a size of transferred anonymous pages is 20 MB. A size of anonymous pages of the APP 3 in the system memory is 30 MB, and a size of transferred anonymous pages is 20 MB. In the manner provided by the foregoing embodiment, it may be determined that a reclaimable memory size corresponding to the APP 1 is 16 MB, a reclaimable memory size corresponding to the APP 2 is 28 MB, a reclaimable memory size corresponding to the APP 3 is 10 MB, and a total reclaimable memory size corresponding to an application set to which the APP 1, the APP 2 and the APP 3 belong is 54 MB. Certainly, a reclaimable memory size is a size of a maximum space that can be reclaimed from a system memory occupied by an application determined based on a transfer proportion corresponding to an application score. An actual to-be-reclaimed space size of the application is not greater than the reclaimable memory size. When it is determined that a system memory size of 27 MB needs to be reclaimed from the application set formed by the APP 1, the APP 2, and the APP 3, it may be determined according to the foregoing embodiment that a to-be-reclaimed space size corresponding to the APP 1 is (27/54)* 16=8 MB, a to-be-reclaimed space size corresponding to the APP 2 is (27/54)*28=14 MB, and a to-be-reclaimed space size corresponding to the APP 3 is (27/54)*10=5 MB.

In this case, after the memory reclaiming, the size of anonymous pages of the APP 1 in the system memory is 32 MB, and the size of transferred anonymous pages is 28 MB; the size of anonymous pages of the APP 2 in the system memory is 46 MB, and the size of transferred anonymous pages is 34 MB; and the size of anonymous pages of the APP 3 in the system memory is 25 MB, and the size of transferred anonymous pages is 25 MB.

In conclusion, for applications with a same application score (or a same application level), if system memory occupations (first space sizes) and transfer sizes (a sum of the second space size and the third space size) corresponding thereto are different, reclaimable memory amounts (or reclaimable memory sizes) corresponding thereto are different and to-be-reclaimed memory amounts (or to-be-reclaimed memory sizes) corresponding thereto are also different.

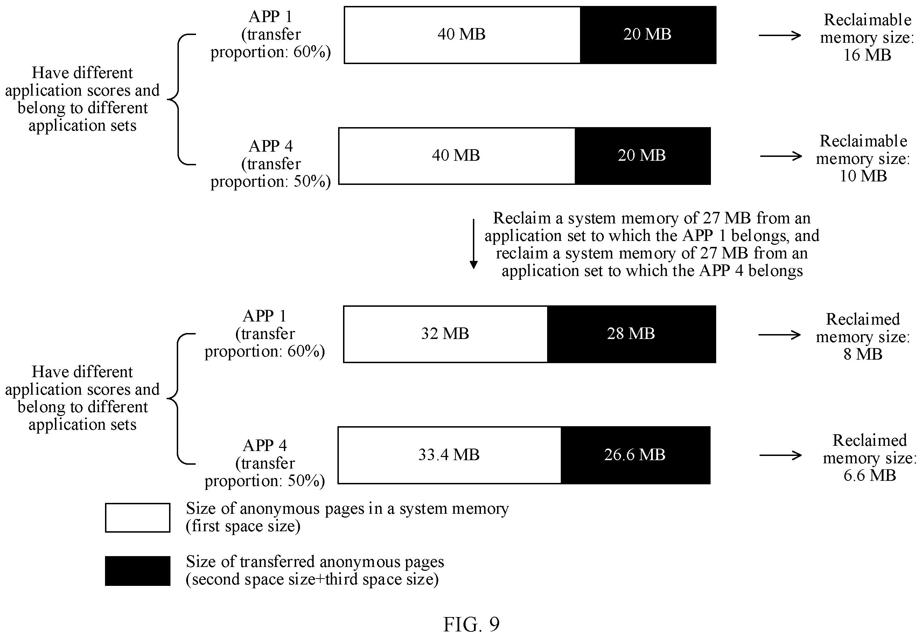

For example, as shown in FIG. 9, application scores corresponding to the APP 1 and the APP 4 are different, the application score of the APP 1 is greater than the application score of the APP 4, and in the first list, a transfer proportion corresponding to the application score of the APP 1 is 60%, and a transfer proportion corresponding to the application score of the APP 4 is 50%. In the scenario shown in FIG. 9, a size of anonymous pages of the APP 1 in a system memory is 40 MB, and a size of transferred anonymous pages is 20 MB; and a size of anonymous pages of the APP 4 in the system memory is 40 MB, and a size of transferred anonymous pages is 20 MB. It may be determined in the manner provided in the foregoing embodiment that a reclaimable memory size corresponding to the APP 1 is 16 MB, and a reclaimable memory size corresponding to the APP 4 is 10 MB. When an occupied system memory size is the same as a size of transferred anonymous pages, due to different application scores, the APP 1 and the APP 4 correspond to different reclaimable memory sizes.

In addition, due to different application scores, the application sets to which the APP 1 and the APP 4 belong correspond to different fourth space sizes. For example, 27 MB is to be reclaimed from the application set to which the APP 1 belongs, and a total reclaimable memory size corresponding to the application set is 54 MB. 20 MB is to be reclaimed from the application set to which the APP 4 belongs, and a total reclaimable memory size corresponding to the application set is 30 MB. In this way, it may be determined according to the foregoing embodiment that the to-be-reclaimed space size corresponding to the APP 1 is (27/54)*16=8 MB, and that the to-be-reclaimed space size corresponding to the APP 4 is (20/30)*10=6.6 MB. In this case, after the memory reclaiming, the size of anonymous pages of the APP 1 in the system memory is 32 MB, and the size of transferred anonymous pages is 28 MB; and a size of anonymous pages of the APP 4 in the system memory is 33.4 MB, and the size of transferred anonymous pages is 26.6 MB.

Obviously, through the method provided in the foregoing embodiment, for applications with different application scores, differentiated memory reclaiming can be implemented, to avoid a case that an excessively large system memory is reclaimed from an application with a high application level while a relatively small system memory is reclaimed from an application with a low application level, reducing a number of anonymous pages that are repeatedly released and reloaded, and improving system memory reclaiming efficiency.

In an implementation, an algorithm for traversing an application to perform memory reclaiming may be as follows:
do{
   score = memcg_score//it obtains an application score of a traversed application;
   reclaim_size = level_reclaim_size[score]//it obtains a memory size to be reclaimed from an application set corresponding to each application score;
   reclaim_memcg_sz = can_reclaim_memcg / level_can_reclaim[score] * reclaim_size //it instructs to obtain a to-be-reclaimed memory size corresponding to an application;
   nr_reclaimed_memcg = try_to_free_mem_cgroup_pages(memcg, reclaim _memcg_sz)//it instructs to reclaim a system memory occupied by the application based on the to-be-reclaimed memory corresponding to the application;
   can_reclaim_memcg -= nr_reclaimed_memcg//it modifies a reclaimable memory size corresponding to a memcg data structure of the application;
   nr_reclaimed += nr_reclaimed_memcg//it calculates a reclaimed size;
   level_can_reclaim[score] -= nr_reclaimed_memcg//it determines a remaining reclaimable memory size in the application set;
   if (nr_reclaimed >= nr_to_reclaim)//where nr _ to _ reclaim is a current total to-be-reclaimed system memory size, nr _ reclaimed indicates a current reclaimed system memory size, and when nr _ reclaimed is not less than nr _ to _ reclaim, memory reclaiming is ended; when nr_reclaimed is less than nr_to_reclaim, a next application is traversed to perform memory reclaiming;
   break;
}while(memcg = memcg_next, memcg != NULL).

An embodiment of this application further provides an electronic device. The electronic device may include a memory and one or more processors. The memory is coupled to the processor. The memory is configured to store computer program code, where the computer program code includes computer instructions. When the processor executes the computer instructions, the electronic device can execute the steps performed by the mobile phone in the foregoing embodiments. Certainly, the electronic device includes but is not limited to the foregoing memory and one or more processors.

An embodiment of this application further provides a chip system. The chip system may be applied to the electronic device in the foregoing embodiments. The chip system includes at least one processor and at least one interface circuit. The processor may be the processor in the foregoing electronic device. The processor and the interface circuit may be connected through a line. The processor may receive computer instructions from the memory of the electronic device through the interface circuit and execute the computer instructions. The computer instructions, when executed by the processor, can enable the electronic device to perform the steps performed by the mobile phone in the foregoing embodiments. Certainly, the chip system may further include another discrete device. This is not specifically limited in this embodiment of this application.

In some embodiments, the foregoing descriptions about implementations allow a person skilled in the art to understand that, for convenient and brief description, division of the foregoing functional modules is taken as an example for illustration. In an actual application, the foregoing functions may be allocated to different modules for implementation as required. In other words, the internal structure of the apparatus is divided into different functional modules to complete all or some of the functions described above. For a specific working process of the system, apparatus, and unit described above, refer to a corresponding process in the foregoing method embodiments. Details are not described herein.

Functional units of embodiments in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of embodiments of this application essentially, or a part contributing to the related art, or all or some of the technical solutions may be implemented in a form of a software product. The computer software product is stored in a storage medium and includes instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a disk, or a compact disc.

The foregoing descriptions are merely specific implementations of embodiments of this application, and the protection scope of embodiments of this application is not limited thereto. Any variation or replacement made within the technical scope disclosed in embodiments of this application shall fall within the protection scope of embodiments of this application. Therefore, the protection scope of embodiments of the disclosure shall be subject to the protection scope of the claims.

## Claims

1. A memory reclaiming method, applied to an electronic device, wherein each application in the electronic device corresponds to a memory control subsystem memcg, and **characterized in that** the method comprises:
determining a first reclaimable memory size corresponding to a first application;
determining a first memory size corresponding to the first application that is run in a background, wherein the first memory size is not greater than the first reclaimable memory size, the first memory size indicates a size of a memory to be reclaimed from a system memory occupied by the first application, the first memory size decreases as an application level of the first application increases, and the application level indicates activeness of the application during running in the background;
reclaiming, based on the first memory size, the system memory occupied by the first application;
wherein the determining a first reclaimable memory size corresponding to the first application comprises:
determining that an application score of the first application is a first score, wherein the application score of the first application decreases as the application level of the first application increases; and
determining the first reclaimable memory size based on the first score and a second memory size and a third memory size corresponding to the first application, wherein the second memory size indicates a size of all anonymous pages in the first application, and the third memory size indicates a size of anonymous pages in the first application that are swapped from the system memory.

2. The method according to claim 1, wherein the determining the first reclaimable memory size based on the first score and a second memory size and a third memory size corresponding to the first application comprises:
determining a transfer proportion corresponding to the first score, wherein the transfer proportion is a proportion used to determine a transferable anonymous page size in a single application, and a higher first score corresponds to a higher transfer proportion;
determining a product of the transfer proportion and the second memory size as a first anonymous page size; and
removing the third memory size from the first anonymous page size, to determine the first reclaimable memory size.

3. The method according to claim 1, wherein the determining a first memory size comprises:
obtaining a first proportion of the first reclaimable memory size to a fourth memory size, wherein the fourth memory size is a sum of reclaimable memory sizes corresponding to all applications whose application score is the first score and that are run in the background; and
determining a product of the first proportion and a fifth memory size as the first memory size, wherein the fifth memory size is a total size of memories to-be-reclaimed from all of the applications whose application score is the first score.

4. The method according to claim 2, wherein each application corresponds to a memcg data structure.

5. The method according to claim 4, wherein the memcg data structure comprises a field for carrying a reclaimable memory size.

6. The method according to claim 5, wherein after the determining the first reclaimable memory size, the method further comprises:
writing the determined first reclaimable memory size into the memcg data structure of the corresponding first application.

7. The method according to claim 6, wherein the determining a first memory size further comprises: obtaining a fourth memory size; and
the obtaining a fourth memory size comprises: obtaining, after a reclaimable memory size is written into the memcg data structure of each application that is run in the background, reclaimable memory sizes from the memcg data structures of applications whose application score is the first score and that are run in the background; and adding up all of the obtained reclaimable memory sizes to obtain the corresponding fourth memory size.

8. The method according to claim 7, wherein after the reclaiming, based on the first memory size, the system memory occupied by the first application, the method further comprises:
updating the reclaimable memory size in the memcg data structure of the first application by using a difference between the first reclaimable memory size of the first application and the first memory size.

9. The method according to claim 3, wherein the determining a first memory size further comprises:
calculating a total reclaimable memory size corresponding to all of the applications that are run in the background in the electronic device; and
obtaining the fifth memory size, wherein a proportion of the fifth memory size to a total to-be-reclaimed memory size of the electronic device is equal to a proportion of the fourth memory size to the total reclaimable memory size of the electronic device.

10. The method according to claim 1, wherein the reclaiming, based on the first memory size, the system memory occupied by the first application comprises:
determining, from anonymous pages of the first application, a target memory page whose system memory occupation is the first memory size, wherein activeness of the target memory page is lower than those of the other anonymous pages of the first application; and
swapping the target memory page from the system memory.

11. The method according to claim 1, further comprising:
determining a sixth memory size corresponding to a second application that is run in the background, wherein the sixth memory size indicates a size of a memory to be reclaimed from a system memory occupied by the second application, and a size of anonymous pages stored in the system memory by the second application and a size of anonymous pages swapped from the system memory are both the same as those of the first application.

12. The method according to claim 11, when an application level of the second application is lower than the application level of the first application, the sixth memory size is greater than the first memory size.

13. The method according to claim 12, further comprising:
reclaiming, based on the sixth memory size, the system memory occupied by the second application, wherein a sum of the first memory size and the sixth memory size are not greater than the total to-be-reclaimed memory size of the electronic device.

14. An electronic device, wherein each application in the electronic device corresponds to a memory control subsystem memcg, the electronic device comprises a processor and a memory, the memory is configured to store computer instructions, and the processor, when executing the computer instructions, causes the electronic device to perform the method according to any one of claims 1 to 13.

15. A computer-readable storage medium, comprising a computer program or instructions that, when executed on a computer, cause the computer to perform the method according to any one of claims 1 to 13.

## Patentansprüche

1. Speicherrückgewinnungsverfahren, das auf eine elektronische Vorrichtung angewendet wird, wobei jede Anwendung in der elektronischen Vorrichtung einem Speichersteuersubsystem memcg entspricht, **dadurch gekennzeichnet, dass** das Verfahren umfasst:
Bestimmen einer ersten rückgewinnbaren Speichergröße, die einer ersten Anwendung entspricht;
Bestimmen einer ersten Speichergröße, die der ersten Anwendung entspricht, welche im Hintergrund ausgeführt wird, wobei die erste Speichergröße nicht größer als die erste rückgewinnbare Speichergröße ist, die erste Speichergröße eine Größe eines Speichers angibt, der aus einem von der ersten Anwendung belegten Systemspeicher zurückgewonnen werden soll, die erste Speichergröße mit zunehmender Anwendungsebene der ersten Anwendung abnimmt und die Anwendungsebene die Aktivität der Anwendung während der Ausführung im Hintergrund angibt;
Rückgewinnen des von der ersten Anwendung belegten Systemspeichers basierend auf der ersten Speichergröße;
wobei das Bestimmen einer ersten rückgewinnbaren Speichergröße, die der ersten Anwendung entspricht, umfasst:
Bestimmen, dass eine Anwendungspunktzahl der ersten Anwendung eine erste Punktzahl ist, wobei die Anwendungspunktzahl der ersten Anwendung mit zunehmender Anwendungsebene der ersten Anwendung abnimmt; und
Bestimmen der ersten rückgewinnbaren Speichergröße basierend auf der ersten Punktzahl sowie einer zweiten Speichergröße und einer dritten Speichergröße, die der ersten Anwendung entsprechen, wobei die zweite Speichergröße eine Größe aller anonymen Seiten in der ersten Anwendung angibt und die dritte Speichergröße eine Größe anonymer Seiten in der ersten Anwendung angibt, die aus dem Systemspeicher ausgelagert wurden.

2. Verfahren nach Anspruch 1, wobei das Bestimmen der ersten rückgewinnbaren Speichergröße basierend auf der ersten Punktzahl sowie einer zweiten Speichergröße und einer dritten Speichergröße, die der ersten Anwendung entsprechen, umfasst:
Bestimmen eines Übertragungsanteils, der der ersten Punktzahl entspricht, wobei der Übertragungsanteil ein Anteil ist, der dazu verwendet wird, eine übertragbare Größe anonymer Seiten in einer einzelnen Anwendung zu bestimmen, und eine höhere erste Punktzahl einem höheren Übertragungsanteil entspricht;
Bestimmen eines Produkts aus dem Übertragungsanteil und der zweiten Speichergröße als eine erste Größe anonymer Seiten; und
Abziehen der dritten Speichergröße von der ersten Größe anonymer Seiten, um die erste rückgewinnbare Speichergröße zu bestimmen.

3. Verfahren nach Anspruch 1, wobei das Bestimmen einer ersten Speichergröße umfasst:
Erhalten eines ersten Anteils der ersten rückgewinnbaren Speichergröße an einer vierten Speichergröße, wobei die vierte Speichergröße eine Summe der rückgewinnbaren Speichergrößen ist, die allen Anwendungen entsprechen, deren Anwendungspunktzahl die erste Punktzahl ist und die im Hintergrund ausgeführt werden; und
Bestimmen eines Produkts aus dem ersten Anteil und einer fünften Speichergröße als erste Speichergröße, wobei die fünfte Speichergröße eine Gesamtgröße der von allen Anwendungen, deren Anwendungspunktzahl die erste Punktzahl ist, zurückzugewinnenden Speicher ist.

4. Verfahren nach Anspruch 2, wobei jede Anwendung einer memcg-Datenstruktur entspricht.

5. Verfahren nach Anspruch 4, wobei die memcg-Datenstruktur ein Feld zum Speichern einer rückgewinnbaren Speichergröße umfasst.

6. Verfahren nach Anspruch 5, wobei das Verfahren nach dem Bestimmen der ersten rückgewinnbaren Speichergröße ferner umfasst:
Schreiben der bestimmten ersten rückgewinnbaren Speichergröße in die memcg-Datenstruktur der entsprechenden ersten Anwendung.

7. Verfahren nach Anspruch 6, wobei das Bestimmen einer ersten Speichergröße ferner umfasst: Erhalten einer vierten Speichergröße; und
das Erhalten einer vierten Speichergröße umfasst: nach dem Schreiben einer rückgewinnbaren Speichergröße in die memcg-Datenstruktur jeder Anwendung, die im Hintergrund ausgeführt wird, Erhalten rückgewinnbarer Speichergrößen aus den memcg-Datenstrukturen von Anwendungen, deren Anwendungspunktzahl die erste Punktzahl ist und die im Hintergrund ausgeführt werden; und Addieren aller erhaltenen rückgewinnbaren Speichergrößen, um die entsprechende vierte Speichergröße zu erhalten.

8. Verfahren nach Anspruch 7, wobei das Verfahren nach dem Rückgewinnen des von der ersten Anwendung belegten Systemspeichers basierend auf der ersten Speichergröße ferner umfasst:
Aktualisieren der rückgewinnbaren Speichergröße in der memcg-Datenstruktur der ersten Anwendung unter Verwendung einer Differenz zwischen der ersten rückgewinnbaren Speichergröße der ersten Anwendung und der ersten Speichergröße.

9. Verfahren nach Anspruch 3, wobei das Bestimmen einer ersten Speichergröße ferner umfasst:
Berechnen einer gesamten rückgewinnbaren Speichergröße, die allen Anwendungen entspricht, die im Hintergrund der elektronischen Vorrichtung ausgeführt werden; und
Erhalten der fünften Speichergröße, wobei ein Anteil der fünften Speichergröße an einer gesamten rückzugewinnenden Speichergröße der elektronischen Vorrichtung gleich einem Anteil der vierten Speichergröße an der gesamten rückgewinnbaren Speichergröße der elektronischen Vorrichtung ist.

10. Verfahren nach Anspruch 1, wobei das Rückgewinnen des von der ersten Anwendung belegten Systemspeichers basierend auf der ersten Speichergröße umfasst:
Bestimmen einer Zielspeicherseite aus anonymen Seiten der ersten Anwendung, deren Systemspeicherbelegung die erste Speichergröße aufweist, wobei die Aktivität der Zielspeicherseite niedriger ist als die der anderen anonymen Seiten der ersten Anwendung; und
Auslagern der Zielspeicherseite aus dem Systemspeicher.

11. Verfahren nach Anspruch 1, ferner umfassend:
Bestimmen einer sechsten Speichergröße, die einer zweiten Anwendung entspricht, welche im Hintergrund ausgeführt wird, wobei die sechste Speichergröße eine Größe eines Speichers angibt, der aus einem von der zweiten Anwendung belegten Systemspeicher zurückgewonnen werden soll, und wobei sowohl eine Größe von anonymen Seiten, die von der zweiten Anwendung im Systemspeicher gespeichert sind, als auch eine Größe von anonymen Seiten, die aus dem Systemspeicher ausgelagert wurden, dieselben sind wie die der ersten Anwendung.

12. Verfahren nach Anspruch 11, wobei, wenn eine Anwendungsebene der zweiten Anwendung niedriger ist als die Anwendungsebene der ersten Anwendung, die sechste Speichergröße größer als die erste Speichergröße ist.

13. Verfahren nach Anspruch 12, ferner umfassend:
Rückgewinnen des von der zweiten Anwendung belegten Systemspeichers basierend auf der sechsten Speichergröße, wobei eine Summe aus der ersten Speichergröße und der sechsten Speichergröße nicht größer ist als die gesamte zurückzugewinnende Speichergröße der elektronischen Vorrichtung.

14. Elektronische Vorrichtung, wobei jede Anwendung in der elektronischen Vorrichtung einem Speichersteuerungs-Subsystem memcg entspricht, wobei die elektronische Vorrichtung einen Prozessor und einen Speicher umfasst, der Speicher dazu konfiguriert ist, Computerbefehle zu speichern, und der Prozessor bei Ausführung der Computerbefehle die elektronische Vorrichtung veranlasst, das Verfahren nach einem der Ansprüche 1 bis 13 durchzuführen.

15. Computerlesbares Speichermedium, umfassend ein Computerprogramm oder Befehle, die, wenn sie auf einem Computer ausgeführt werden, den Computer veranlassen, das Verfahren nach einem der Ansprüche 1 bis 13 durchzuführen.

## Revendications

1. Procédé de récupération de mémoire, appliqué à un dispositif électronique, dans lequel chaque application dans le dispositif électronique correspond à un sous-système de contrôle de mémoire memcg, et **caractérisé en ce que** le procédé comprend :
la détermination d'une première taille de mémoire récupérable correspondant à une première application ;
la détermination d'une première taille de mémoire correspondant à la première application exécutée en arrière-plan, dans lequel la première taille de mémoire n'est pas supérieure à la première taille de mémoire récupérable, la première taille de mémoire indique une taille de mémoire à récupérer à partir d'une mémoire système occupée par la première application, la première taille de mémoire diminue à mesure que le niveau d'application de la première application augmente, et le niveau d'application indique l'activité de l'application lors de son exécution en arrière-plan ;
la récupération, sur la base de la première taille de mémoire, de la mémoire système occupée par la première application ;
dans lequel la détermination d'une première taille de mémoire récupérable correspondant à la première application comprend :
la détermination du fait qu'un score d'application de la première application est un premier score, dans lequel le score d'application de la première application diminue à mesure que le niveau d'application de la première application augmente ; et
la détermination de la première taille de mémoire récupérable sur la base du premier score et d'une deuxième taille de mémoire et d'une troisième taille de mémoire correspondant à la première application, dans lequel la deuxième taille de mémoire indique une taille de toutes les pages anonymes dans la première application, et la troisième taille de mémoire indique une taille des pages anonymes dans la première application qui sont permutées à partir de la mémoire système.

2. Procédé selon la revendication 1, dans lequel la détermination de la première taille de mémoire récupérable sur la base du premier score et d'une deuxième taille de mémoire et d'une troisième taille de mémoire correspondant à la première application comprend :
la détermination d'une proportion de transfert correspondant au premier score, dans lequel la proportion de transfert est une proportion utilisée pour déterminer une taille de page anonyme transférable dans une application unique, et un premier score plus élevé correspond à une proportion de transfert plus élevée ;
la détermination d'un produit de la proportion de transfert et de la deuxième taille de mémoire en tant que première taille de page anonyme ; et
la suppression de la troisième taille de mémoire de la première taille de page anonyme, pour déterminer la première taille de mémoire récupérable.

3. Procédé selon la revendication 1, dans lequel la détermination d'une première taille de mémoire comprend :
l'obtention d'une première proportion de la première taille de mémoire récupérable par rapport à une quatrième taille de mémoire, dans laquelle la quatrième taille de mémoire est une somme des tailles de mémoire récupérables correspondant à toutes les applications dont le score d'application est le premier score et qui sont exécutées en arrière-plan ; et
la détermination d'un produit de la première proportion et d'une cinquième taille de mémoire en tant que première taille de mémoire, dans laquelle la cinquième taille de mémoire est une taille totale de mémoires à récupérer à partir de toutes les applications dont le score d'application est le premier score.

4. Procédé selon la revendication 2, dans lequel chaque application correspond à une structure de données memcg.

5. Procédé selon la revendication 4, dans lequel la structure de données memcg comprend un champ pour transporter une taille de mémoire récupérable.

6. Procédé selon la revendication 5, dans lequel, après la détermination de la première taille de mémoire récupérable, le procédé comprend en outre :
l'écriture de la première taille de mémoire récupérable déterminée dans la structure de données memcg de la première application correspondante.

7. Procédé selon la revendication 6, dans lequel la détermination d'une première taille de mémoire comprend en outre : l'obtention d'une quatrième taille de mémoire ; et
l'obtention d'une quatrième taille de mémoire comprend : l'obtention, après qu'une taille de mémoire récupérable est écrite dans la structure de données memcg de chaque application qui est exécutée en arrière-plan, des tailles de mémoire récupérables à partir des structures de données memcg des applications dont le score d'application est le premier score et qui sont exécutées en arrière-plan ; et l'addition de toutes les tailles de mémoire récupérables obtenues pour obtenir la quatrième taille de mémoire correspondante.

8. Procédé selon la revendication 7, dans lequel, après la récupération, sur la base de la première taille de mémoire, de la mémoire système occupée par la première application, le procédé comprend en outre :
la mise à jour de la taille de mémoire récupérable dans la structure de données memcg de la première application en utilisant une différence entre la première taille de mémoire récupérable de la première application et la première taille de mémoire.

9. Procédé selon la revendication 3, dans lequel la détermination d'une première taille de mémoire comprend en outre :
le calcul d'une taille totale de mémoire récupérable correspondant à toutes les applications qui sont exécutées en arrière-plan dans le dispositif électronique ; et
l'obtention de la cinquième taille de mémoire, dans laquelle une proportion de la cinquième taille de mémoire par rapport à une taille totale de mémoire à récupérer du dispositif électronique est égale à une proportion de la quatrième taille de mémoire par rapport à la taille totale de mémoire récupérable du dispositif électronique.

10. Procédé selon la revendication 1, dans lequel la récupération, sur la base de la première taille de mémoire, de la mémoire système occupée par la première application comprend :
la détermination, à partir de pages anonymes de la première application, d'une page mémoire cible dont l'occupation de la mémoire système est la première taille de mémoire, dans laquelle l'activité de la page mémoire cible est inférieure à celle des autres pages anonymes de la première application ; et
la permutation de la page mémoire cible depuis la mémoire système.

11. Procédé selon la revendication 1, comprenant en outre :
la détermination d'une sixième taille de mémoire correspondant à une seconde application qui est exécutée en arrière-plan, dans laquelle la sixième taille de mémoire indique une taille de mémoire à récupérer à partir d'une mémoire système occupée par la seconde application, et une taille de pages anonymes stockées dans la mémoire système par la seconde application et une taille de pages anonymes permutées depuis la mémoire système sont toutes deux identiques à celles de la première application.

12. Procédé selon la revendication 11, dans lequel, lorsqu'un niveau d'application de la seconde application est inférieur au niveau d'application de la première application, la sixième taille de mémoire est supérieure à la première taille de mémoire.

13. Procédé selon la revendication 12, comprenant en outre :
la récupération, sur la base de la sixième taille de mémoire, de la mémoire système occupée par la seconde application, dans laquelle une somme de la première taille de mémoire et de la sixième taille de mémoire n'est pas supérieure à la taille totale de mé moire à récupérer du dispositif électronique.

14. Dispositif électronique, dans lequel chaque application dans le dispositif électronique correspond à un sous-système de contrôle de mémoire memcg, le dispositif électronique comprend un processeur et une mémoire, la mémoire est configurée pour stocker des instructions informatiques, et le processeur, lors de l'exécution des instructions informatiques, amène le dispositif électronique à effectuer le procédé selon l'une quelconque des revendications 1 à 13.

15. Support de stockage lisible par ordinateur, comprenant un programme informatique ou des instructions qui, lorsqu'ils sont exécutés sur un ordinateur, amènent l'ordinateur à effectuer le procédé selon l'une quelconque des revendications 1 à 13.
